(19) Europäisches Patentamt

European Patent Office

Office européen des brevets

(11) **EP 1 705 583 A1**

(12) **EUROPEAN PATENT APPLICATION**
published in accordance with Art. 158(3) EPC

(43) Date of publication:
27.09.2006 Bulletin 2006/39

(51) Int Cl.:
*G06F 17/30* (2006.01)

(21) Application number: 05703481.1

(22) Date of filing: 12.01.2005

(86) International application number:
PCT/JP2005/000242

(87) International publication number:
WO 2005/069170 (28.07.2005 Gazette 2005/30)

(84) Designated Contracting States:
DE FR

(30) Priority: 15.01.2004 JP 2004007685

(71) Applicant: MATSUSHITA ELECTRIC INDUSTRIAL CO., LTD.
Osaka 571-8501 (JP)

(72) Inventors:
• TANAKA, Naoki
Mat. Elec. Ind. Co., Ltd., IPROC
Chuo-ku, Osaka-shi, Osaka 540-6319 (JP)

• OOKUBO, Haruyo
Mat. Elec. Ind. Co., Ltd., IPROC
Chuo-ku, Osaka-shi, Osaka 540-6319 (JP)
• NAKASE, Yoshimori
Mat. Elec. Ind. Co., Ltd.,IPROC
Chuo-ku, Osaka-shi, Osaka 540-6319 (JP)

(74) Representative: Pautex Schneider, Nicole Véronique
Novagraaf International SA
25, Avenue du Pailly
1220 Les Avanchets - Geneva (CH)

(54) **IMAGE FILE LIST DISPLAY DEVICE**

(57) An image display device that displays a list of a plurality of image files classified by a series of plural types on a display, including a thumbnail display page drawing unit 23, which displays each of the plurality of image files with a thumbnail that is an image scaled down from an image indicated by each image file, in which the thumbnail display page drawing unit 23 positions and displays a thumbnail corresponding to an image file belonging to a targeted type, and positions and displays a thumbnail corresponding to an other image file belonging to the targeted type or a thumbnail corresponding to an image file belonging to an other type located next to the targeted type on an untargeted page having a smaller area than the targeted page.

FIG. 7

**Description**

**Technical Field**

The present invention relates to an image file list display device that displays a list of image files.

**Background Art**

In recent years, it has been popular that a moving image and a still image are taken by a digital still camera, a digital moving image camera and a portable mobile telephone. Also, in parallel with it, a personal computer for individual use (hereinafter called as "PC") has been widely used and the number of personally-owned image files accumulated in a device such as a memory device in the PC, has been explosively increased.

When an image is viewed or printed, meaning that an image is searched for a certain purpose, from a large amount of image files, a scaled-down image of an image file (hereinafter called as a "thumbnail") is used. More specifically, it is common that a list of thumbnails is displayed on an image display device and a thumbnail of an image suitable for the purpose is selected from the thumbnails displayed.

For example, in the PC, a large amount of image files are usually classified by a user and stored into a folder with a name corresponding to the classification. There is application software that displays the list of thumbnails of the image files based on each folder, and the user views the thumbnails displayed through the application software on the PC and selects an image suitable for the purpose.

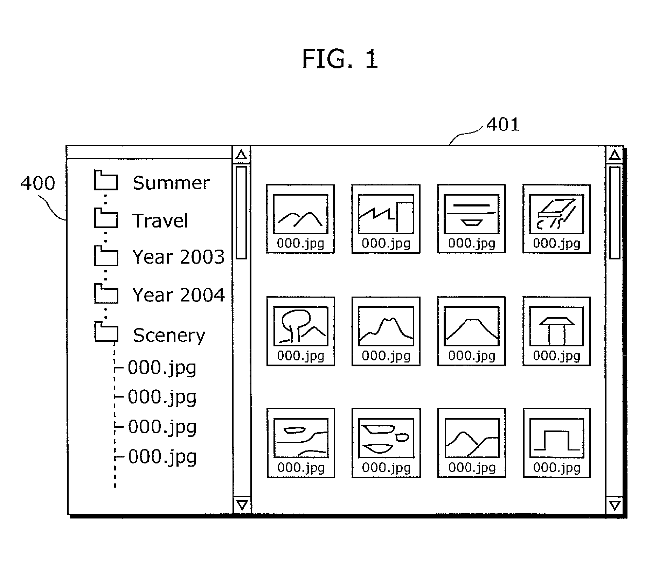

As an example of a general user interface for a conventional image display device, Fig. 1 to Fig. 4 show a display example of the thumbnails on the PC.

Fig. 1 shows a diagram indicating a screen configuration sample for the thumbnails displayed on a display device connected to the PC. As shown in Fig. 1, there is a folder display area 400 on a left side of the screen, and there is a thumbnail display area 401 on a right side of the screen.

When the user selects a folder displayed on the folder display area 400, image files stored in the selected folder are listed in a prescribed size on the thumbnail display area 401.

Here, there is a case that the display area of the display device is limited and all of thumbnails in the image files of the selected folder may not be displayed. In that case, the application software provides following two methods to the user to have the user display the thumbnails in the image files, which are not displayed.

A first method is a method to display a scroll bar on the screen and to display the thumbnails outside of the screen by operating the scroll bar.

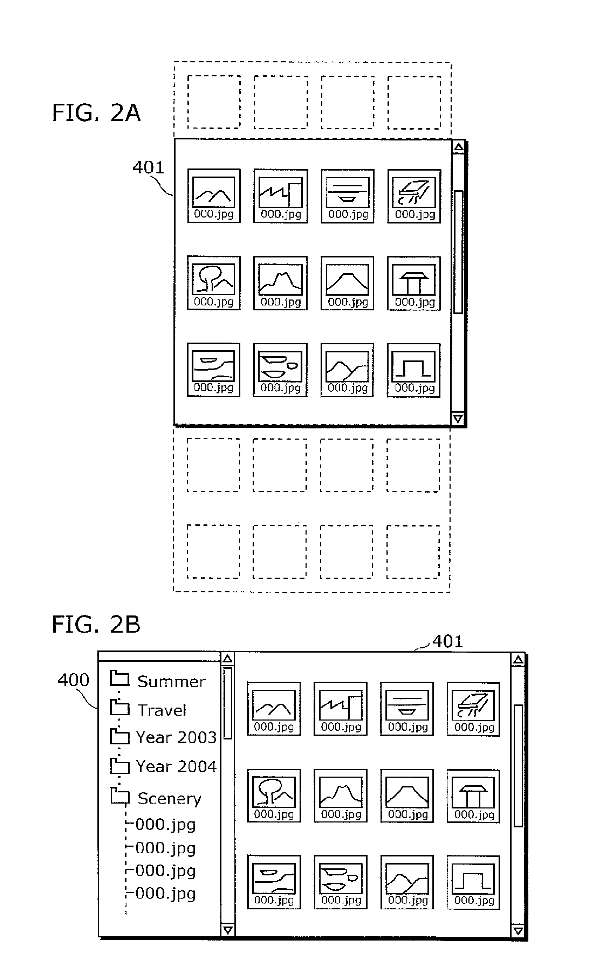

Fig. 2A is a diagram that shows a situation only 12 thumbnails are displayed on the screen though there are actually 24 thumbnails subject to display.

As shown in Fig. 2B, among 24 thumbnails subject to display, only a part that exists in the thumbnail display area 401 is actually displayed on the screen. At that time, it is possible to let the user project by a location and length of the scroll bar, which scope of the thumbnails is being displayed on the screen among all of the thumbnails subject to display.

The display example shown in Fig. 2 indicates an example to display the scroll bar on a right edge of the screen and move it in upper and lower directions. But in a similar way, there is a method available to display the scroll bar in a horizontal direction on a bottom of the screen and to move a displaying scope of the thumbnails into a right or left direction through the user's operations

A second method is a method to display a larger number of thumbnails by reducing display size of each thumbnail.

Fig. 3 is a diagram to show a screen to change the display size of the thumbnail. By using a display size setup menu 402 indicated on the Fig. 3 and accepting a setup of the display size, the display size is changed.

Fig. 4A is a display example of the screen in the case where the display size of the thumbnail is set to 128 pixels x 128 pixels, and Fig. 4B is a diagram to show a display example of the screen in the case where the display size of the thumbnail is set to 32 pixels x 32 pixels.

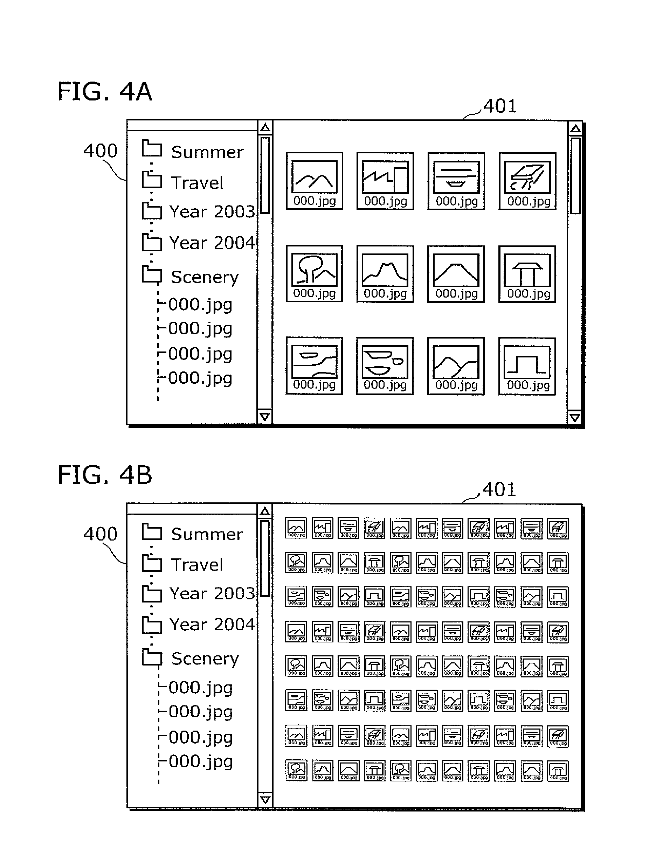

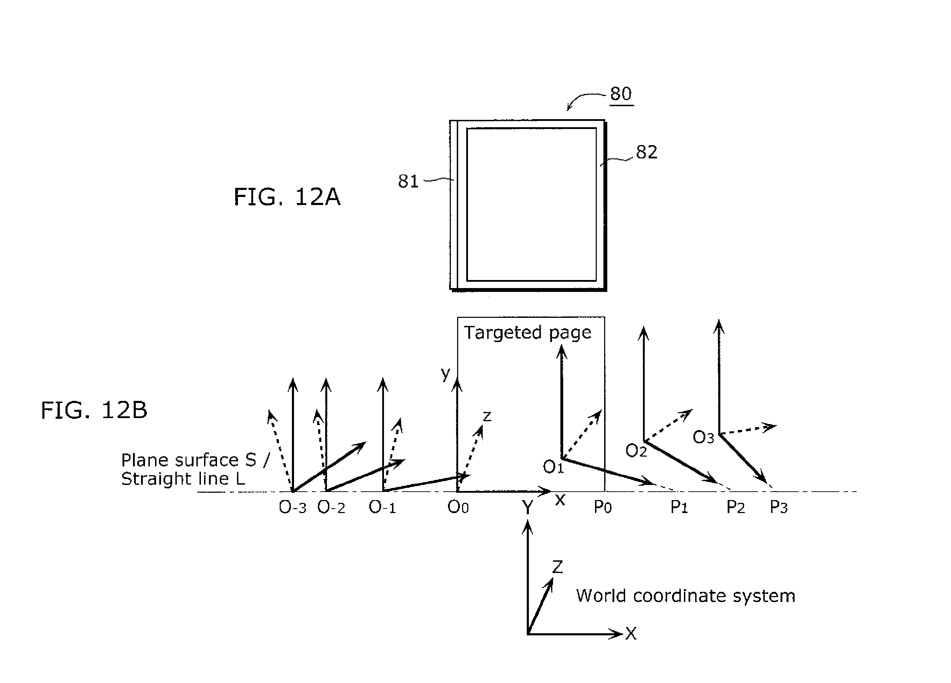

As shown in Fig. 4A, 12 thumbnails are display in the case where of 128 pixels x 128 pixels. On the other hand, as shown in Fig. 4B, in the case of 32 pixels x 32 pixels, for example, 88 thumbnails are displayed. In short, it can display approximately seven times (88/12 ≒ 7.33) as many thumbnails as the case of 128 pixels x 128 pixels.

Other techniques regarding the thumbnail displays such as those shown above are publicly disclosed as well (refer to Patent Literature 1, Japanese Laid-Open Patent application No. 10-307936 as an example)

## Disclosure of Invention

### Problems that Invention is to Solve

In the first method mentioned above, for the thumbnails that are not displayed in the screen, it is not possible to confirm what kind of image, etc. are contained unless they are displayed within the screen by operating the scroll bar. That is to say, when a large volume of images is managed, a large number of thumbnails outside of the screen would exist so that there is an issue that searching a targeted image becomes difficult.

Also, in the second method, when a large amount of images are displayed at once, it is necessary to reduce the display size of the thumbnails so that a level of visibility of each thumbnail is lowered, which is an issue.

Further, as mentioned above, when the image files stored in a folder selected by the user are only subject to thumbnail display and if the user wants to know a volume or contents of the image files stored in a folder other than the selected folder, he must reselect the folder, which is an issue.

In this case, for example, if the image file in other folder is put in the selected folder, the user can view many thumbnails without reselecting a folder beforehand. However, thumbnails are simply sorted and displayed by a file name, etc. Therefore, they are not necessarily aligned in an order of attribute information that the user takes into account for his selection criteria.

From a view point of above issues, the present invention aims at providing an image file list display device displaying a screen, by which a user can easily find an image file he targets to from a large volume of image files, within limited space of display.

### Means to Solve the Problems

The image file list display device of the present invention is an image file list display device that displays on a screen a list of a plurality of image files classified by a series of plural types, the image file list display device including a scaled-down image display unit which displays each of the plurality of image files as a scaled-down image, which is an image scaled down from an image indicated by each image file, in which the scaled-down image display unit positions and displays a scaled-down image corresponding to an image file that belongs to a targeted type on a targeted page, and positions and displays a scaled-down image corresponding to an other image file that belongs to the targeted type or a scaled-down image corresponding to an image file that belongs to an other type lying adjacent to the targeted type, on an untargeted page having a smaller display area than the targeted page.

In this way, the image file list display device can display a number of scaled-down images on a targeted page and an untargeted page of which display area is smaller than the targeted page. In addition, there is continuity in a type between the scaled-down image displayed on the targeted page and the scaled-down image displayed on the untargeted page.

In short, it is possible for an user to view a thumbnail displayed on the targeted page as well as referring an overview of thumbnails of which type is closer to the type of the thumbnail when he looks for an image file from a large volume of image files.

The image file list display device in an aspect of the invention further including a classification type display unit for displaying a type where an image file corresponding to a scaled-down image displayed by the scaled-down image display unit belongs to, in which the classification type display unit displays, into alignment corresponding to a location of the targeted page and a location of the untargeted page on the screen, the type where the image file corresponding to the scaled-down image displayed on the targeted page belongs to and the type where the image file corresponding to the scaled-down image displayed on the untargeted page belongs to.

The image file list display device in an aspect of the invention, in which, in the case where scaled-down images corresponding to image files belonging to a same type are positioned on a plurality of pages, the classification type display unit displays the type corresponding to the pages in an area having size corresponding to the number of the pages.

In this way, the user can recognize which type of image file the scaled-down image of the targeted page and of the untargeted page is for. Also, because each type is displayed in the area of size corresponding to the number of pages by each type, it is possible for the user to recognize how many image files exist for each of the types according to the size.

### Effects of the Invention

It is possible to provide an image file list display device that display a screen within a limited display area where a user can easily finds an image file he targets to from a large volume of image files.

**Brief Description of Drawings**

FIG. 1 is a diagram to show a screen structure example in the case where thumbnails are displayed on the display device connected to the PC through a conventional technique.

FIG. 2 is a diagram to show a situation where only 12 thumbnails are displayed in the screen through the conventional technique even though there are actually 24 thumbnails are available for displaying.

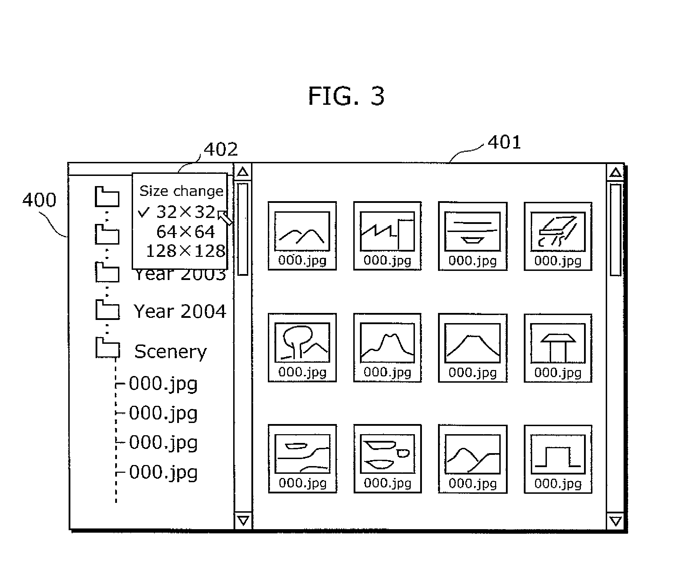

FIG. 3 is a diagram to show an example of a screen to change thumbnail size through the conventional technique.

FIG. 4 is a diagram to show a screen display example according to the change in the thumbnail size through the conventional technique.

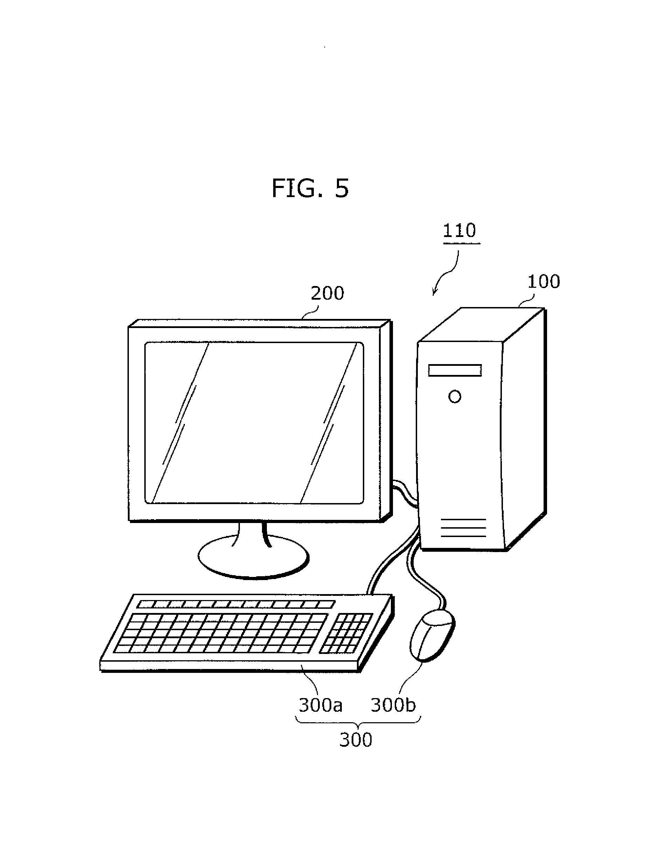

FIG. 5 is a diagram to show an outlook of an image display system related to an embodiment of the present invention.

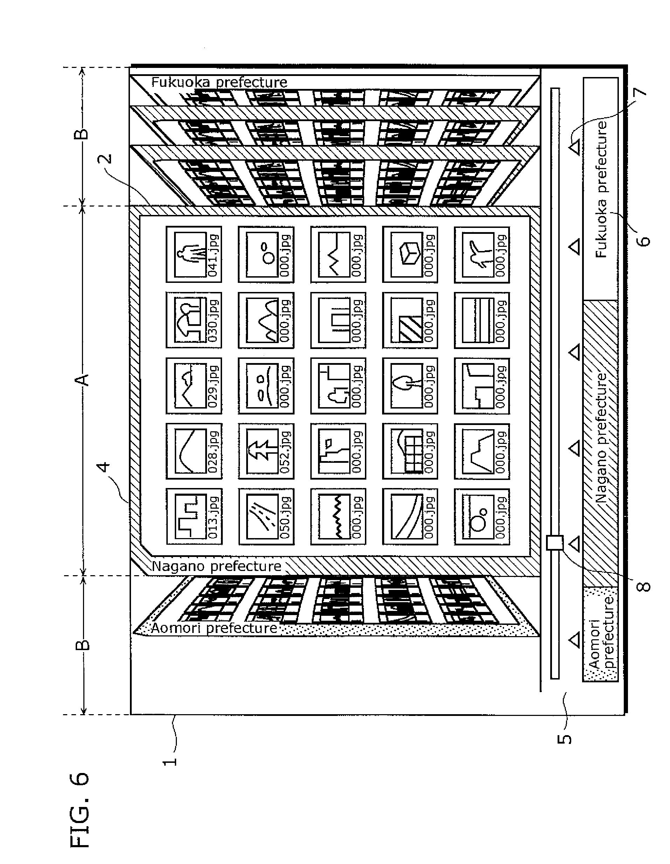

FIG. 6 is a diagram to show a display example of a thumbnail display window displayed on a display 200 by an image display device 100.

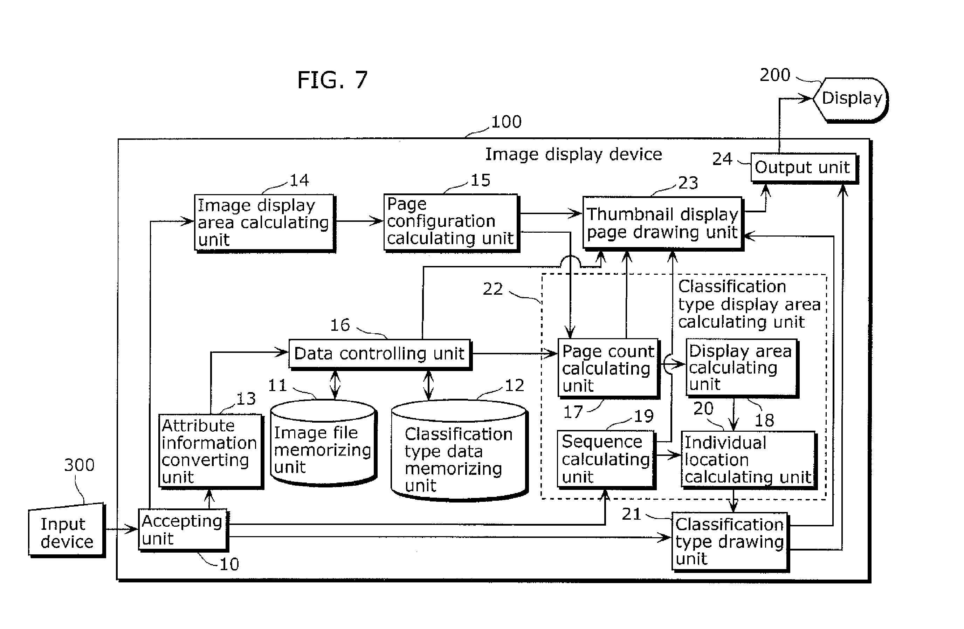

FIG. 7 is a functional block diagram to show functional structure of the image display device 100.

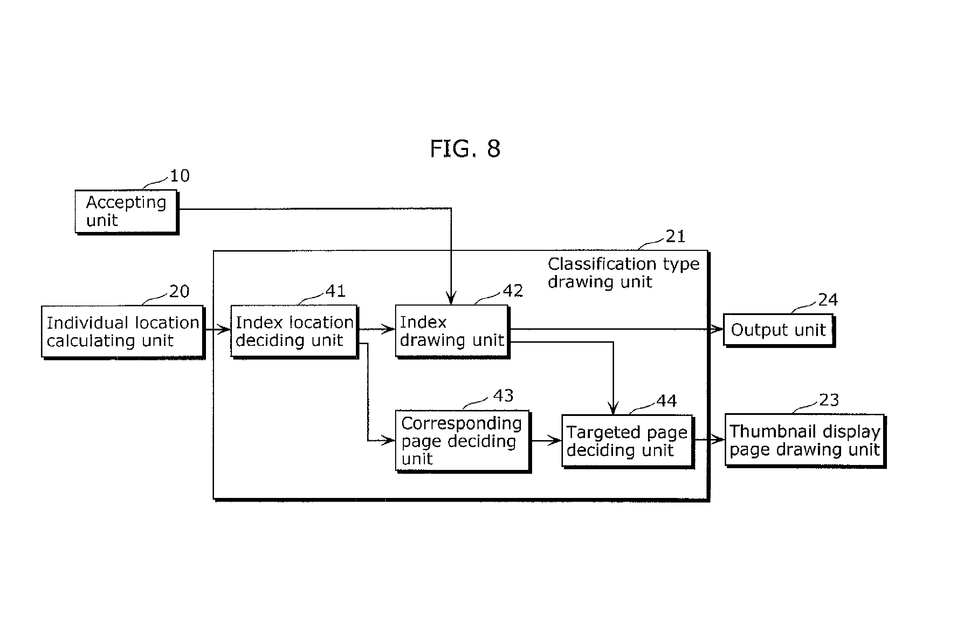

FIG. 8 is a functional block diagram to show functional structure of a classification type drawing unit 21.

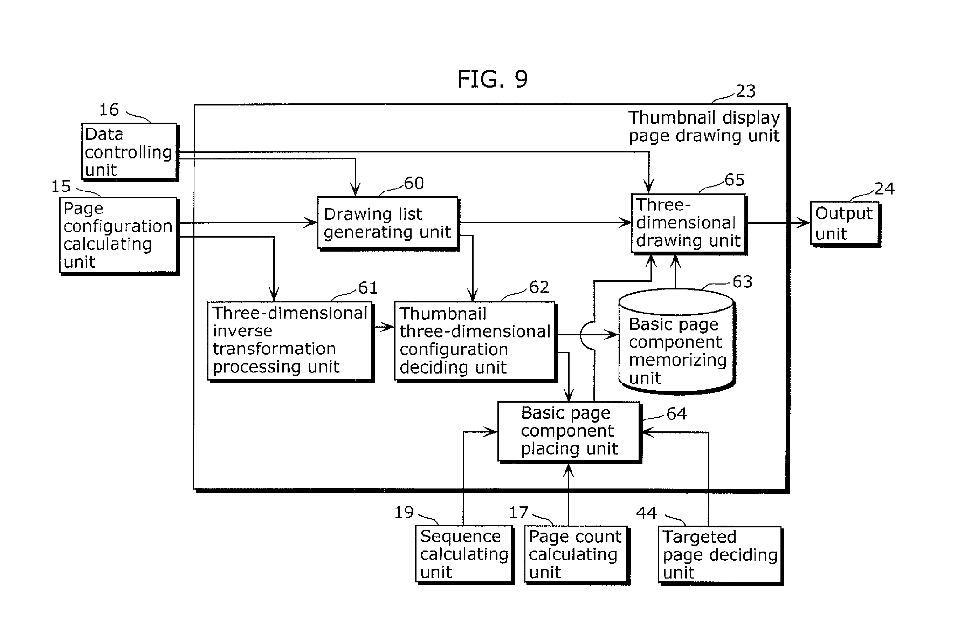

FIG. 9 is a functional block diagram to show functional structure of a thumbnail display page drawing unit 23.

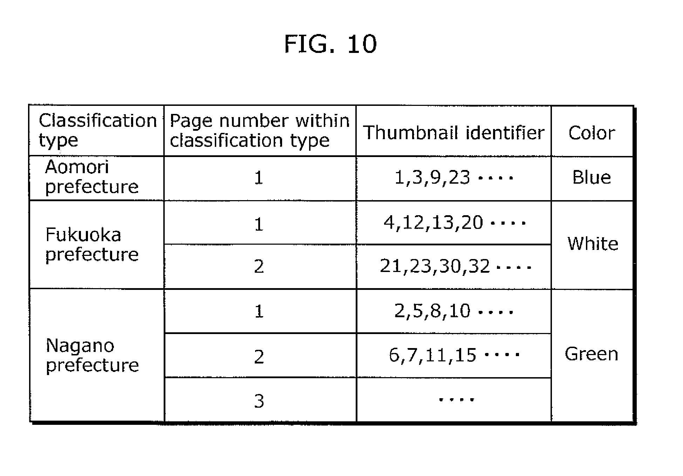

FIG. 10 is a diagram to show an example of data structure of a drawing list.

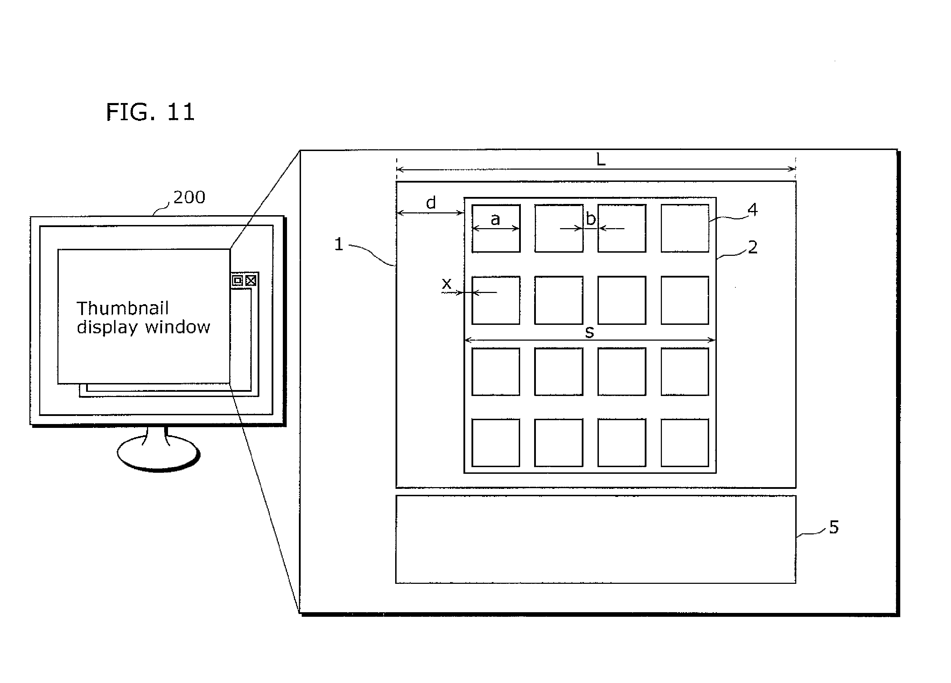

FIG. 11 is a diagram to show size of a thumbnail display page 2, etc. in an image display area 1 displayed on the thumbnail display window.

FIG. 12 is a diagram to express a typical example of a virtual page configuration and a location of a basic page component in a world coordinate system.

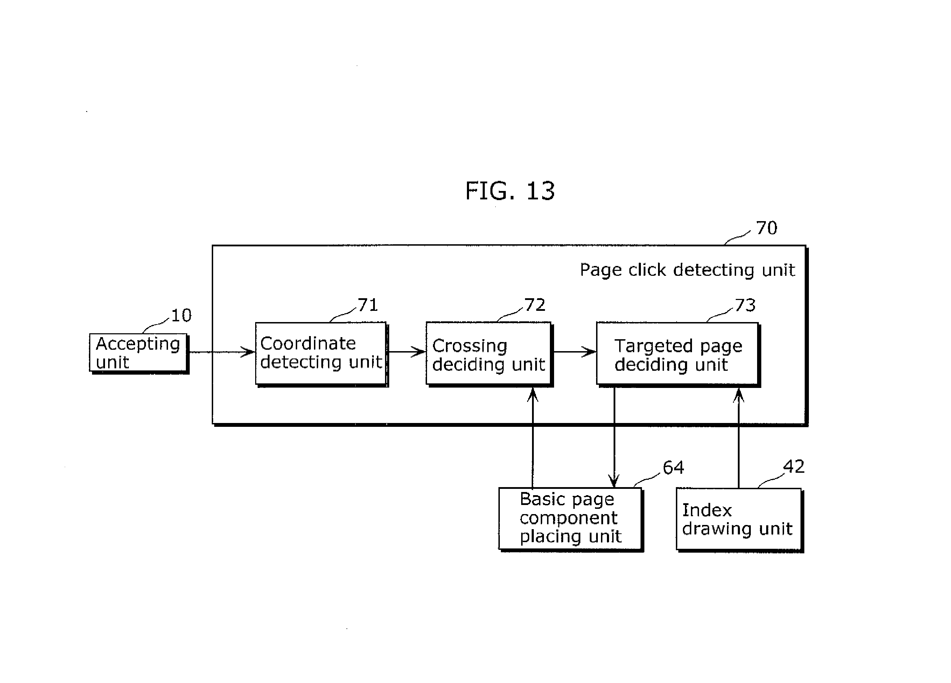

FIG. 13 is a functional block diagram of a page click detecting unit 70 that is a composing unit for changing a targeted page by a click on a thumbnail display page 2.

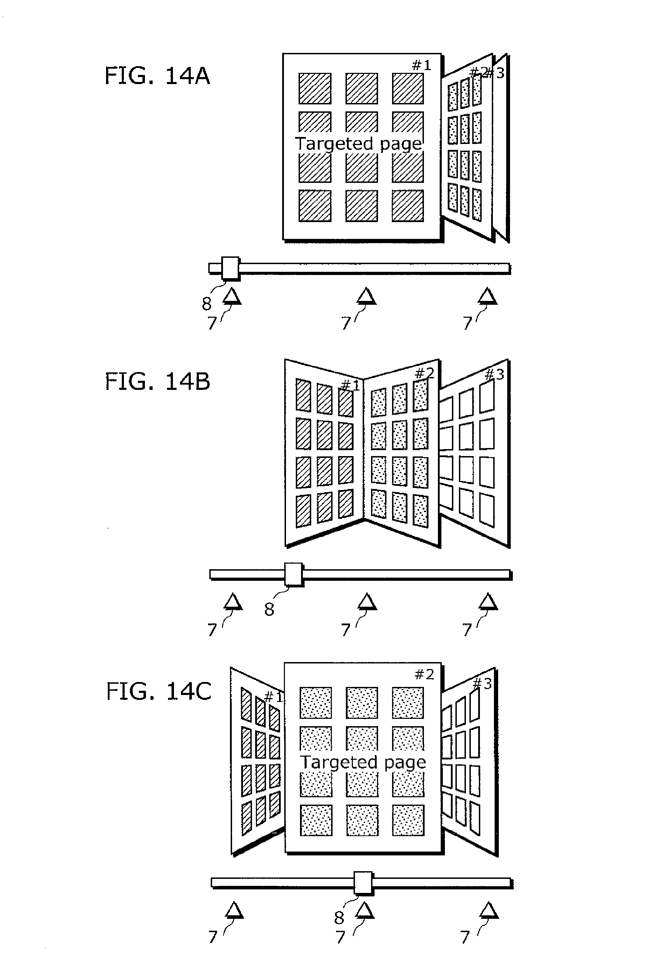

FIG. 14 is a diagram to show a typical animation display in the case where the targeted page is switched.

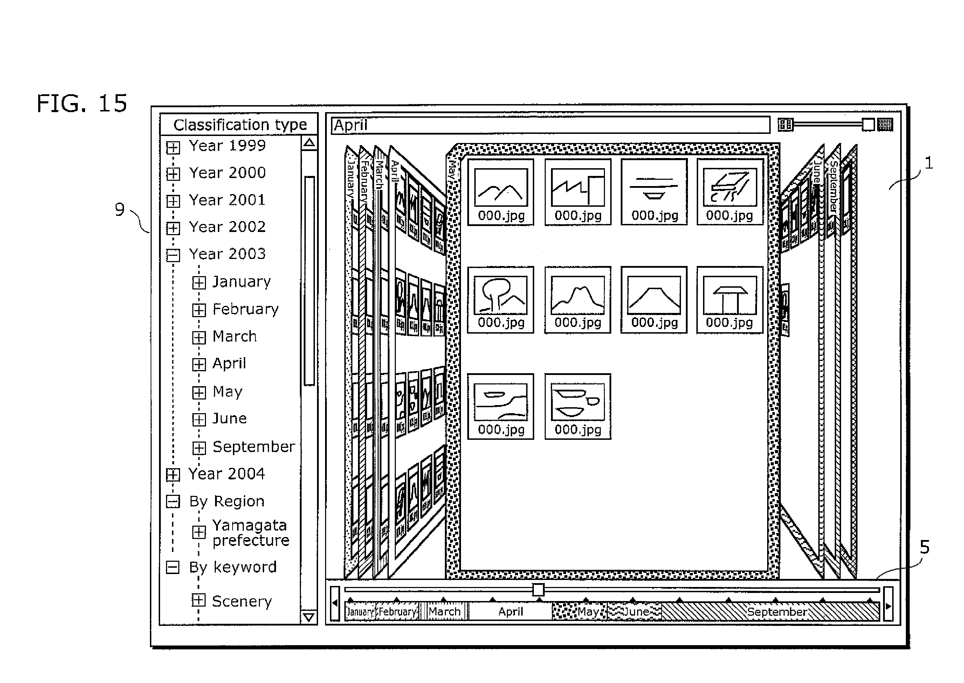

FIG. 15 is a diagram to show a display example in the case where a classification type list is located within the thumbnail display window.

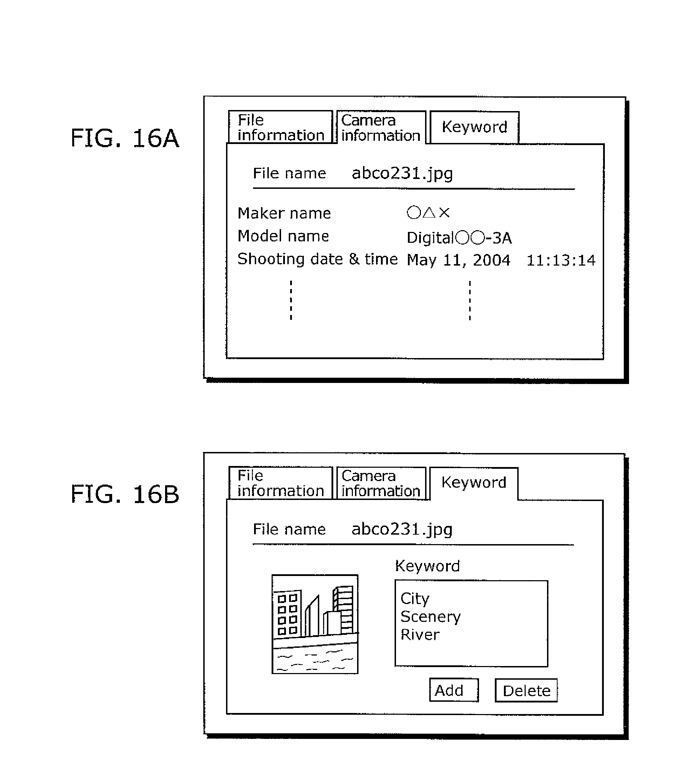

FIG. 16 is a diagram to show a display example in the case where attribute information of the image file and a keyword input screen are displayed on the display 200.

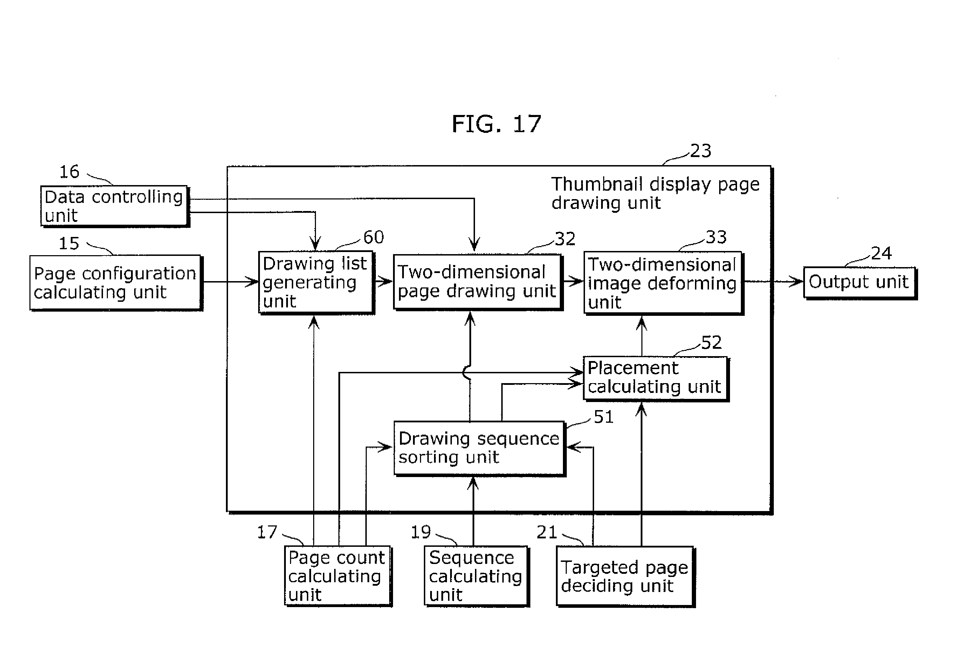

FIG. 17 is a functional block diagram to show functional structure of the thumbnail display page drawing unit 23 for executing a two-dimensional process on the thumbnail display page 2 and displaying it.

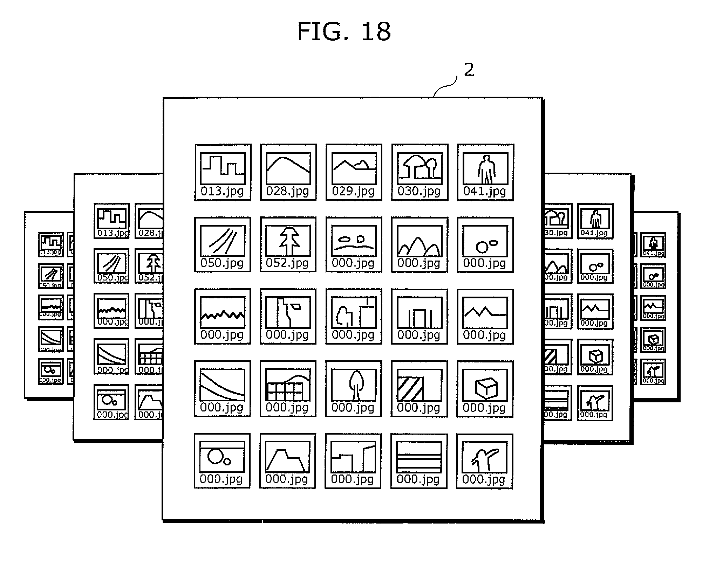

FIG. 18 is a diagram to show a display example of the thumbnail display page 2 that is drawn and displayed on the display 200 by the thumbnail display page drawing unit 23 shown on the Fig. 17.

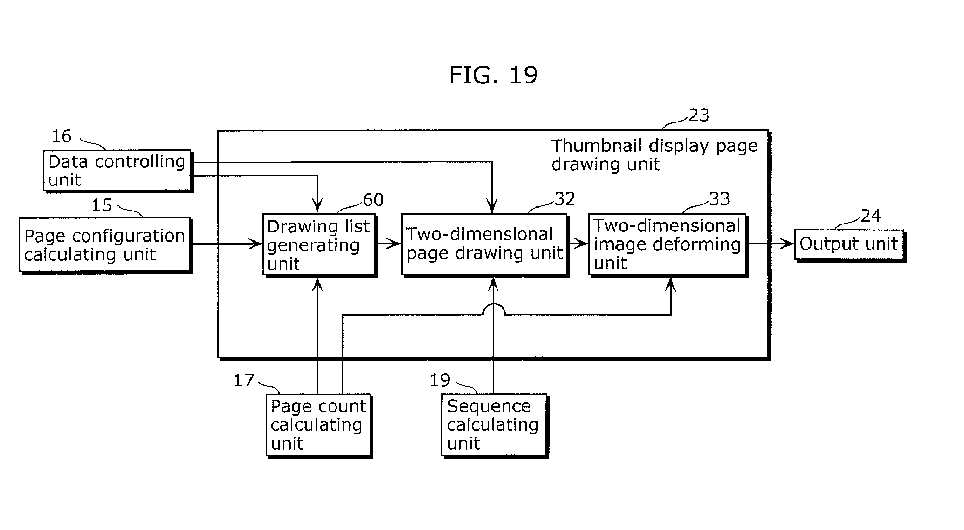

FIG. 19 is a functional block diagram to show another structure of the thumbnail display page drawing unit 23 for executing a two-dimensional process on the thumbnail display page 2 and displaying it.

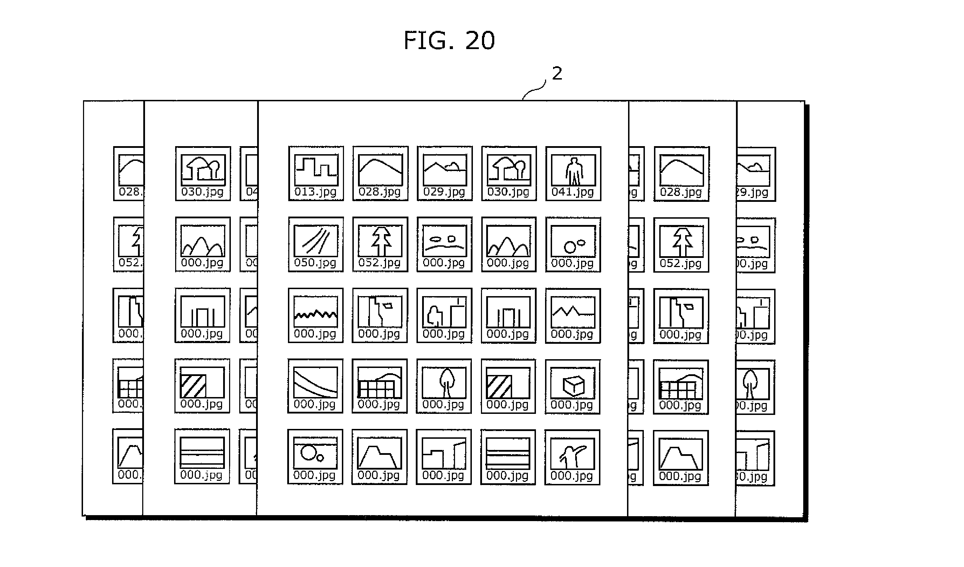

FIG. 20 is a diagram to show a display example of the thumbnail display page 2 drawn and displayed on the display unit 200 by the thumbnail display page drawing unit 23 shown on the Fig. 19.

**Best Mode for Carrying out the Invention**

With reference to drawings, the following explains a best mode for carrying out the present invention.

At first, using Fig. 5 to Fig. 9, structure of the image display system related to an embodiment of the present invention is explained.

Fig. 5 is a drawing that shows an outlook of an image display system 110 related to the embodiment of the present invention.

The image display system is a system that displays an image to a user and includes an image display device 100, a display 200 and an input device 300. The input device 300 includes a keyboard 300a and a mouse 300b.

The image display device 100 is an example of an image file list display device of the present invention, which draws an image memorized according to an instruction of the user, and displays it on the display 200.

The image display device 100 includes a thumbnail list display function that lists up thumbnails of images and an image display function that displays an original image indicated by a thumbnail selected by the user from the list of the thumbnails.

The display 200 is a liquid crystal display that displays a screen drawn by the image display device 100. The input device 300 is the keyboard 300a and the mouse 300b to input a user instruction into the image display device 100.

Fig. 6 is a diagram that shows a display example of the thumbnail display window displayed on the display 200 by the image display device 100.

The thumbnail display window includes an image display area 1 and a classification type display area 5. The image display area 1 includes a targeted area A located in a center and untargeted areas B that exist on right and left sides of the targeted area A. Also, the thumbnail display pages 2 where a plural number of thumbnail frames 4 are located is displayed on each of these areas. The thumbnails and a file name of an image file corresponding to the thumbnails are displayed on the thumbnail frame 4.

In addition, hereinafter the thumbnail display page 2 displayed in the targeted area A is referred to as a "targeted page".

Also, hereinafter the thumbnail display page 2 displayed in the untargeted area B is also referred to as an "untargeted page". Therefore, any thumbnail display page 2 other than the targeted page is regarded to be the untargeted page. Also, it is possible to display a plural number of untargeted pages in the untargeted area B.

Furthermore, the image display area 1 has virtual three-dimensional space and the targeted page is frontally located. The thumbnail display page 2 displayed in the untargeted area B is displayed obliquely in the virtual three-dimensional space. As a result, the thumbnails facing the front on the targeted page and the obliquely located thumbnails on the thumbnail display page 2 displayed in the untargeted area B are displayed in the image display area 1. That is to say, in a display area on the screen, a display area of the untargeted page is smaller than the one of the targeted page.

In the classification type display area 5, an individual classification type name display section 6 that displays a classification type name, which is a name of the classification type subject to display at present.

The classification type is information that shows a classification of an image file and its thumbnail. To be more specific, the image file has attribute information such as a shooting location, shooting date and time. Also, because the thumbnail is corresponded to an attribute of an image file, which is an original image, and memorized, the thumbnails that belong to the same classification type have common attribute information.

In addition to it, the classification type has hierarchic structure. For example, a classification type called "Aomori prefecture" and "Nagano prefecture" are held in a classification type called "Region".

On a background of the individual classification type name display section 6 displayed in the classification type display area 5, a color is attached. For example, the background color of the "Aomori prefecture" is in blue (which is expressed with dots on Fig. 6), the background color of the "Nagano prefecture" is in green (which is expressed with slant lines on Fig. 6), and the background color of the "Fukuoka prefecture" is in white. Additionally, a peripheral part of each thumbnail display page 2 in the image display area 1 has the same color as the one for the individual classification type name display section 6 that corresponds to its thumbnail display page 2.

On the individual classification type name display section 6, a thumbnail display index 7 that shows existence of the thumbnail display page 2 that corresponds to each of the classification type. For example, there are two pages of the thumbnail display page 2 for the classification type, "Fukuoka prefecture".

Furthermore, at present, a targeted page index 8 that clearly specifies the thumbnail display page 2 that is a targeted page. As shown in Fig.6, the targeted page at present is a first page of the thumbnail display page 2 for the classification type, "Nagano prefecture".

By clicking the thumbnail display index 7 through user's operations of the input unit 300, the targeted page is changed to the thumbnail display page 2 corresponding to the clicked thumbnail display index 7.

Actions taken by the image display device 100 to draw the image display area 1 and the classification type display area 5 of the thumbnail display window are explained later.

Fig. 7 is a functional block diagram that shows functional structure of the image display device 100. As stated above, the image display device 100 is a device that draws a memorized image file according to an instruction of the user, and displays it on the display 200.

Regarding the image display device 100, only characteristic composing units in the image display device 100 are explained.

The image display device 100 includes an accepting unit 10, an image file memorizing unit 11, a classification type data memorizing unit 12, an attribute information converting unit 13, an image display area calculating unit 14, a page configuration calculating unit 15, a data controlling unit 16, a classification type drawing unit 21, a classification type display area calculating unit 22, a thumbnail display page drawing unit 23 and an output unit 24.

The classification type display area calculating unit 22 includes a page count calculating unit 17, a display area calculating unit 18, a sequence calculating unit 19 and an individual location calculating unit 20.

The accepting unit 10 is a processing unit that accepts an input conducted by the user from the input device 300, and according to contents of the input, transfers the contents of the input to each composing unit included in the image display device 100.

The image file memorizing unit 11 is a memorizing device that memorizes image files and attribute information held by the image files (for example, latitude and longitude for a shooting location, shooting date and time and so on). In the present embodiment, it is assumed that a plural number of image files and their attribute information are already memorized.

The classification type data memorizing unit 12 is a memorizing device that memorizes thumbnails, which is either extracted or generated from the image file, by corresponding it to attribute information of its original image, and further memorizes its classification type. Additionally, an identifier is attached to each of the thumbnails when it is memorized so that the thumbnails and the attribute information of the thumbnails are specified by the identifier.

The data controlling unit 16 is a processing unit that controls inputs and outputs of information in the image file memorizing unit 11 and the classification type data memorizing unit 12.

The attribute information converting unit 13 is a processing unit that converts input contents from the input device 300 into attribute information held in the image file.

For example, if a prefecture name is input by the user, it reads out latitude and longitude of a shooting location of attribute information held in the image file through the data controlling unit 16, and converts it to a prefecture name corresponding to the latitude and the longitude. Details of the conversion are explained later in description of actions.

The image display area calculating unit 14 is a processing unit that decides a location of the image display area 1 and horizontal and vertical numbers of pixels (unless otherwise specified, hereinafter referred to as "size") from image display size of the display 200 or size of the thumbnail display window designated by the user

The page configuration calculating unit 15 is a processing unit that calculates and decides a number of thumbnails by each page, which is a maximum number of thumbnails displayed on a single page of the thumbnail display page 2, a page configuration as a shape of the page, size of page blank space within the page, etc., from the size of the image display area 1 decided by the image display area calculating unit 14 and size stipulated as a thumbnail. In the present embodiment, the page configuration of the thumbnail display page 2 is decided to be a rectangle.

The classification type display area calculating unit 22 is a processing unit that decides size of the classification type display area 5, and decides a location and size of the individual classification type name display section 6, etc. displayed in the classification type display area 5, and as stated above, includes the page count calculating unit 17, the display area calculating unit 18, the sequence calculating unit 19 and the individual location calculating unit 20.

The page count calculating unit 17 is a processing unit that calculates a number of the classification type pages which is a number of the thumbnail display page 2 corresponding to each classification type. The display area calculating unit 18 is a processing unit that decides a location and size of the classification type display area 5. Also, the display area calculating unit 18 decides an individual classification type area based on the number of classification type pages calculated by the page count calculating unit 17. Here, the individual classification type area is an area of each classification type in the classification type display area 5, and an area where each of the individual classification type name display section 6 exists. In addition, size of the individual classification type area is decided in proportion to the number of classification type pages calculated by the page count calculating unit 17.

The sequence calculating unit 19 is a processing unit that decides a classification type display sequence, which is a display sequence of the individual classification type name display section 6 in the classification type display area 5 based on a classification type sequence parameter entered or designated from the input device 300. The classification type sequence parameter is a parameter regarded as criteria for a display sequence of the individual classification type name display section 6. In the display example shown in Fig. 1, a parameter, "From north" is being designated.

The individual location calculating unit 20 is a processing unit that calculates a location and an area of the individual classification type name display section 6 in the classification type display area 5 from the classification type display sequence decided by the sequence calculating unit 19 and the individual classification type area decided by the display area calculating unit 18.

The classification type drawing unit 21 is one of examples for a classification type display unit and a slider display unit in the image file list display device of the present invention, which is a processing unit that draws the classification type display area 5. Details of the classification type drawing unit 21 are explained later with reference to Fig. 8.

The thumbnail display page drawing unit 23 is a processing unit that takes out a thumbnail to be displayed from the classification type data memorizing unit 12 according to a number of thumbnails calculated per page and a page configuration decided by the page configuration calculating unit 15, and a number of the classification type pages and a classification type display sequence that are outputs of the classification type display area calculating unit 22, and draws the image display area 1 containing the thumbnail display page 2. Details of the thumbnail display page drawing unit 23 are explained later with reference to Fig. 9.

The thumbnail display page drawing unit 23 is one of examples for a scaled-down image display unit in the image file list display device of the present invention.

The output unit 24 is a processing unit that receives data of the classification type display area 5 and of the image display area 1 drawn by the classification type drawing unit 21 and the thumbnail display page drawing unit 23, and outputs it to the display 200.

Fig. 8 is a functional block diagram that shows functional structure of the classification type drawing unit 21. The classification type drawing unit 21 is, as stated above, a processing unit that draws the classification type display area 5, which includes an index location deciding unit 41, an index drawing unit 42, a corresponding page deciding unit 43 and a targeted page deciding unit 44.

The index location deciding unit 41 is a processing unit that decides a location of the thumbnail display index 7 located at regular intervals on the individual classification type name display section 6 based on the location and the area of the individual classification type name display section 6 calculated by the individual location calculating unit 20.

The index drawing unit 42 is a processing unit that draws the classification type display area 5 including the thumbnail display index 7. Also, it accepts clicking operations input from the input device 300 by the user for the thumbnail display index 7 via the accepting unit 10, and informs the targeted page deciding unit 44 which thumbnail display index 7 is clicked.

The corresponding page deciding unit 43 is a processing unit that decides one-to-one corresponding relationship between each thumbnail display index 7 and the thumbnail display page 2 displayed in the image display area 1 from the classification type display sequence and a number of the classification type pages received via the individual location calculating unit 20.

The targeted page deciding unit 44 is a processing unit that transmits the number of the thumbnail display page 2 corresponding to the clicked thumbnail display index 7, that is, the number of the thumbnail display page 2 to be a targeted page, from the corresponding relationship between the thumbnail display index 7 and the thumbnail display page 2, which is an output of the corresponding page deciding unit 43.

Fig. 9 is a functional block diagram that shows functional structure of the thumbnail display page drawing unit 23. The thumbnail display page drawing unit 23, as stated above, is a processing unit that draws the image display area 1, which includes a drawing list generating unit 60, a three-dimensional inverse transformation processing unit 61, a thumbnail three-dimensional configuration deciding unit 62, a basic page component memorizing unit 63, a basic page component placing unit 64 and a three-dimensional drawing unit 65.

The drawing list generating unit 60 is a processing unit that generates a drawing list, which is a list based on each classification type for page numbers of the thumbnail display page 2 to be drawn and identifiers, etc of the thumbnails to be placed. The drawing list is explained later with reference to Fig. 10.

The three-dimensional inverse transformation processing unit 61 is a processing unit that decides a virtual page configuration of the thumbnail display page 2 in virtual three-dimensional space by using the image display area 1 as a view port of the virtual three-dimensional space, and a page configuration area calculated by the page configuration calculating unit 15 as its basis, etc.

The thumbnail three-dimensional configuration deciding unit 62 is a processing unit that decides a virtual thumbnail configuration, which is a configuration of the thumbnail mapped on the thumbnail display page 2 in a virtual page configuration.

The basic page component memorizing unit 63 is a memorizing unit that memorizes the virtual page configuration and the virtual thumbnail configuration as a basic page component. A heading component, which is a part to show a heading of each page, is already stored in the basic page component memorizing unit 63. The heading component is explained later with reference to Fig. 12.

The basic page component placing unit 64 is a processing unit that places the basic page component as a basis for placement of the thumbnail display page 2 in virtual three-dimensional space. The three-dimensional drawing unit 65 is a processing unit that draws the image display area 1 including the thumbnail display page 2 placed in the virtual three-dimensional space.

Fig. 10 is a drawing to show one of examples for data structure of the drawing list. The drawing list, as stated above, is a list based on each classification type for page numbers of the thumbnail display page 2 to be drawn and the identifiers, etc. of the thumbnails to be placed. The drawing list includes "a classification type", "a page number within a classification type page", "a thumbnail identifier", and "a color" as its item.

The drawing list is generated by the drawing list generating unit 60 based on a number of thumbnails per page decided by the page configuration calculating unit 15, a classification type memorized in the classification type data memorizing unit 12, and a thumbnails and its attribute information. It memorizes the "color" as its item sent from the classification type drawing unit 21.

The drawing list indicated in Fig. 10 shows thumbnails having a classification type, "Aomori prefecture", "Nagano prefecture", or "Fukuoka prefecture" as its attribute information are subject to be drawn, and also the page number of the thumbnail display page 2 is assigned to each of the classification type, and the thumbnail identifier respectively placed on each of the thumbnail display page 2 is addressed.

Next, operations of the image display device 100 in the image display system 1 of the present embodiment is explained.

<1. Registration of a classification type>

A prefecture name is input as a classification type from the input device by the user. For example, if "Aomori prefecture" is input, the attribute information converting unit 13 receives "Aomori prefecture" via the accepting unit 10.

The attribute information converting unit 13 reads out latitude and longitude of a shooting location, which is attribute information of an image file, and decides whether the latitude and the longitude respectively correspond to "Aomori prefecture" or not. If it decides the latitude and the longitude correspond to "Aomori prefecture", it converts the latitude and the longitude to "Aomori prefecture", and transmits it to the data controlling unit.

The data controlling unit 16 extracts a thumbnail of an image file of which latitude and longitude are converted to "Aomori prefecture". Furthermore, it makes "Aomori prefecture" be corresponded to the thumbnail and have the classification type data memorizing unit 12 memorize it. Additionally, it makes the image file memorizing unit 11 memorize "Aomori prefecture" as attribute information of the image files.

If there is a thumbnail already corresponding to other attribute information in the classification type data memorizing unit 12, it adds the classification type "Aomori prefecture" as new attribute information to be memorized for the thumbnails. Also, if the image file does not contain any thumbnail, the data controlling unit 16 generates a thumbnail from the image file.

Regarding the above decision whether latitude and longitude correspond to one prefecture or not, it is conducted based on degrees of latitude and degrees of longitude and digitized information of prefecture boarders.

To be more specific, suppose if latitude is x, and longitude is y on a map for a prefecture boarder, the prefecture boarder can be expressed as a line segment, $ax+by+c=0$, and the attribute information converting unit 13 digitizes the boarder lines by converting a prefecture into an n polygon. For example, Aomori prefecture is approximated by an n convex polygon and its sides of the polygon are expressed by a directional vector $P_m$ ($m = 1$ to $n$). Regarding a direction of the vector, if the direction of the vector is set to be a front, it is a direction where an inside of the prefecture is always located at a left side of the vector.

Also, if a position of a shooting location for an image A is Q, and if a starting point of a directional vector $P_m$ of each ridge line to a directional vector for Q is $Q_m$, Q is validated to be an inside of Aomori prefecture when all of vector products, $P_m \times Q_m$ are positive. Therefore, the image A is classified into Aomori prefecture. If it is approximated by a reentering polygon, it can be divided into convex polygons and validated whether each piece is located inside or outside of each convex polygon.

Through the above operations, the classification type "Aomori prefecture" is registered as attribute information of the thumbnail in the classification type data memorizing unit 12, and also as attribute information of an image file in the image file memorizing unit 11.

When the data controlling unit 16 memorizes "Aomori prefecture", "Nagano prefecture" and "Fukuoka prefecture" as attribute information of the thumbnail in the classification type memorizing unit 12, it also memorizes these prefecture names as a classification type. In addition, it generates a classification type, "Region", which is a higher level concept of these prefecture names, and makes the classification type, "Region" be corresponded to each of the classification types for these prefecture names and has the classification type memorizing unit 12 memorize them.

The display example of the thumbnail display window shown in Fig. 6 is a display example in the case where "Nagano prefecture" and "Fukuoka prefecture" are registered after the above mentioned "Aomori prefecture" is registered, and a "Region" is designated as its higher level classification type for these prefecture names through certain operations of the user.

In a way like this, the image display device 100 can convert latitude and longitude, which is difficult to be understood by the user, into an explicitly understandable prefecture name, and can register it. That is to say, the prefecture name can be displayed as a classification type. Moreover, the data controlling unit 16 can search the thumbnail to be displayed by a name of the prefecture where its original image is taken, which speeds up searching processes.

<2. Decision of a location and size for each component in the image display area 1>

Fig. 11 is a drawing to show size of each component in the image display area 1 displayed on the thumbnail display window.

It is possible to change a vertical to horizontal ratio and a number of pixels for the thumbnail display window through operations of the input device 300 by the user. In addition, the thumbnail display window has an area to show a menu (not shown) and others for file operations (hereinafter referred to as "other area") besides the image display area 1 and the classification type display area 5.

Therefore, the image display area calculating unit 14 decides a location and size of the image display area 1 by reducing the other area from the thumbnail display window area decided by the user operations. A horizontal width of the classification type display area 5 is decided by the classification type display area calculating unit 22. Also, a vertical width of the classification type display area 5 is a predetermined value. That is to say, the vertical width of the image display area 1 is decided by reducing the predetermined vertical width of the classification type display area 5 from a vertical width of the thumbnail display window.

Here, as shown in Fig. 6, the image display device 100 displays a thumbnail according to a page unit of the thumbnail display page 2 in the image display area 1. Therefore, the page configuration calculating unit 15 uses the same size as the targeted area A of the image display area 1 as the size of the thumbnail display page 2, which becomes a target page.

In the present embodiment, the horizontal width of the target area A is decided at a rate of the horizontal width of the image display area 1. And its rate is the one selected by the user from three choices of "80 percent, 70 percent or 60 percent".

That is to say, the image display area calculating unit 14 receives the rate designated by the user, and decides a number of pixels for the horizontal axis of the targeted area A. The page configuration calculating unit 15 receives the number of pixels for the horizontal axis of the targeted area A and decides the value as a number of pixels for the horizontal axis of the targeted page.

The page configuration calculating unit 15 calculates a number of thumbnails per page and size of blank space in a page based on the decided number of pixels for the horizontal axis of the thumbnail display page 2 and size of the thumbnails. To be more specific, they are calculated through following actions.

As shown in Fig. 11, suppose the number of pixels for the horizontal axis of the image display area 1 is L, the number of pixels for the horizontal axis of the thumbnail display page 2 is S, the number of pixels for the horizontal axis of the thumbnail is a, the number of pixels for the horizontal axis between thumbnails is b, the number of pixels for the horizontal axis for both right and left blank space on the thumbnail display page 2 is x, the number of pixels for the horizontal axis of the untargeted area B located at right and left sides in the image display area 1 is d (in the present embodiment, size of both right and left the untargeted area B is identical).

Here, L is a value decided by the image display area calculating unit 14, and S is a value already decided by the page configuration calculating unit 15. Consequently, d is also a decided value. Also, certain values are respectively prescribed for a and b. Therefore, the page configuration calculating unit 15 calculates a number of thumbnails per page for the thumbnail display page 2 and a number of pixels for the horizontal axis of both right and left blank space.

Under the above conditions, a following formula works out.

$$L = ka + (k-1)b + 2x + 2d \quad \text{(Formula 1)}$$

$$x \geqq x_{min}$$

(k: a number of thumbnails in a horizontal axis direction on the thumbnail display page, $x_{min}$ : Minimum x)

That is, calculate a number of thumbnails, $k_{max}$ in a horizontal axis direction of the maximum thumbnail display page that becomes

$$2x = L - k(a + b) + b - 2d \geqq 2x_{min} \quad \text{(Formula 2)}$$

Next, calculate x that satisfies a following formula, Formula 3 using a number of thumbnails, $k_{max}$, in a horizontal axis direction calculated from the above (Formula 3).

$$S = k_{max} a + (k_{max} - 1) b + 2x \quad \text{(Formula 3)}$$

From this, a number of pixels for the horizontal axis of the blank space x is calculated. In the same way, the number of thumbnails in a horizontal axis direction can also be decided. In the way like this, because the number of thumbnails in the horizontal axis direction and the number of thumbnails in the vertical axis direction can be decided, the number of thumbnails per page, which is the maximum number of thumbnails positioned on a page of the thumbnail display page 2, can be calculated. As stated above, in the current embodiment, the page configuration of the thumbnail display page 2 is a rectangle.

Here, it is also possible, without stipulating a as a number of pixels for a horizontal axis of the thumbnails, to increase or decrease the number of pixels for the thumbnails in proportion to the size of the image display area 1, that is, in proportion to the size of the thumbnail display page. However, though it is effective if a ratio between horizontal and vertical size of the image display area 1 is limited, the ratio between horizontal and vertical size for a thumbnail is also changed and the thumbnail becomes distorted if a ratio between horizontal and vertical size is not limited. In the present embodiment, since the size of the thumbnail display window is variable through user operations, the ratio between vertical and horizontal size of the thumbnail is also changed. Therefore, in the present embodiment, the number of pixels for the thumbnail is prescribed.

As mentioned above, based on the location and size of each component calculated, the thumbnail display page drawing unit 23 draws the image display area 1.

<3. Decision of a location and size of each component in the classification type display area 5>

Next, the classification type display area calculating unit 22 outputs a number of classification type pages, a classification type display sequence, a location and size of the individual classification type area based on a number of thumbnails per page calculated by the page configuration calculating unit 15 and a number of thumbnails per classification type memorized in the classification type data memorizing unit 12.

The following explains operations regarding outputs of above mentioned values of the page count calculating unit 17, the display area calculating unit 18, the sequence calculating unit 19 and the individual location calculating unit 20, which are composing elements of the classification type display area calculating unit 22 shown in Fig. 7.

Following explanation is provided based on a case assuming that a classification type, "Region" is selected and that thumbnails having "Aomori prefecture", "Nagano prefecture" or "Fukuoka prefecture", which are a lower level classification type of the "Region", as their attribute information are subject to display through specific operations of the input device 300 by the user.

The page count calculating unit 17 calculates a number of classification type pages that should be displayed by each classification type. To be more specific, the number of thumbnails per page, which is calculated by the page configuration calculating unit 15 is assumed to be 25 thumbnails.

Moreover, among the thumbnails memorized in the classification type data memorizing unit 12, numbers of thumbnails having either the classification type "Aomori prefecture", "Nagano prefecture", or "Fukuoka prefecture" as its attribute information are assumed to be respectively 23, 72 and 48 thumbnails. The numbers of each classification type page are simply 23/25, 72/25 and 48/25. Here, values under a decimal point for each of the values are rounded up so that the numbers of classification type pages are: one page for "Aomori prefecture"; three pages for "Nagano prefecture"; and two pages for "Fukuoka prefecture".

Next, the display area calculating unit 18 decides a horizontal width of the classification type display area 5 from the screen display size of the display 200 or the size of the thumbnail display window designated by the user in the same way as the image display area calculating unit 14 does. Furthermore, based on the number of the classification type pages, it decides a horizontal width of the individual classification type area, which is an area of each classification type. To be more specific, it is decided through following actions. However, certain values are stipulated for a vertical width of the classification type display area 5 and a vertical width of the individual classification type area.

The display area calculating unit 18 reduces the other area from the area of the thumbnail display window decided by the user's operations, and then decides a location of the classification type display area 5 and a number of pixels for its horizontal axis, in the same way as the image display area calculating unit 14 does.

Next, a ratio between numbers of each classification type pages for "Aomori prefecture", "Nagano prefecture" and "Fukuoka prefecture" is 1:3:2 so that the number of pixels of the horizontal axis for the classification type display area 5 is divided by 1:3:2 to decide numbers of pixels of the horizontal axis for each individual classification type area of "Aomori prefecture", "Nagano prefecture" and "Fukuoka prefecture".

Here, in Fig. 6, from left to right, the classification type is displayed in a sequence from north to south, that is in a sequence starting from "Aomori prefecture", "Nagano prefecture" and "Fukuoka prefecture". This sequence is decided by the sequence calculating unit 19.

To be more specific, the sequence calculating unit 19 accepts a classification type sequence parameter, which is a criteria of the sequence and input from the input device 300.

The sequence calculating unit 19 decides the classification type display sequence based on the classification type sequence parameter and information necessary for calculation of the sequence. The information necessary for calculation of the sequence is information related to the classification type, which is held by the sequence calculating unit 19. For example, information related to a location where a prefecture exists is held by the sequence calculating unit 19. And, in the case of the display example shown in Fig. 6, the sequence is calculated based on the information and the classification type sequence parameter specifying "From north".

In the present embodiment, the classification type display sequence calculated by the sequence calculating unit 19 is a sequence sorted according to a certain criteria. That is to say, it is a continuous sequence in a degree of similarities of the classification types. Therefore, except a first and a last ones in the sequence, if a certain classification type is set to be a standard criteria, a location of a classification type that is most similar to the standard classification type is closest to it. As it goes far from the standard classification type, the least similar classification types are located. Hereinafter, classification types aligned according to a continuous sequence of similarity of classification type are called as "a series of classification types".

This classification type display sequence calculated by the sequence calculating unit 19 is also an alignment sequence of the thumbnail display page 2 decided by the thumbnail display page drawing unit 23. That is to say, the classification types of the thumbnail display page 2 that are aligned and displayed on the image display unit 1 are a series of classification types. Actions taken by the thumbnail display page drawing unit 23 are explained later.

Here, it is possible to change the classification type sequence parameter. The classification type sequence parameter is changed to other parameter through a specific operation of the input device 300 by the user (for example, it is changed to "From south"). In accordance with this change, the sequence calculating unit 19 calculates a new classification type display sequence through above mentioned actions.

The individual location calculating unit 20 calculates a location and a number of pixels for a horizontal axis of the individual classification type area within the classification type display area 5 from the classification type display sequence calculated by the sequence calculating unit 19 and the location of the classification type display area 5 and the number of pixels for the horizontal axis of the individual classification type area that are calculated by the display area calculating unit 18.

Based on the locations and sizes of each components calculated above, the classification type drawing unit 21 draws a classification type display area.

<4. Drawing of the classification type display area 5>

Next, the classification type drawing unit 21 receives locations and sizes of each components within the classification type display area 5 from the individual location calculating unit 20, and draws the classification type display area 5 including each component.

The following explains actions related to the above mentioned drawing taken by the index location deciding unit 41, the index drawing unit 42, the corresponding page deciding unit 43 and the targeted page deciding unit 44, which are composing elements of the classification type drawing unit 21 shown in Fig. 8.

The index location deciding unit 41 receives a location and size of the individual classification type area, a classification type display sequence and a number of classification type pages that are output from the individual location calculating unit 20. From these values received, it decides locations of the thumbnail display indexes 7 for a number of each classification type pages at regular intervals on an upper part of the individual classification type area.

The index drawing unit 42 draws the thumbnail display index 7 based on the location decided by the index location deciding unit 41. Also, it draws the individual classification type display area.

Through actions taken by the above index location deciding unit 41 and the index drawing unit 42, the thumbnail display indexes 7 are located at regular intervals in a way they correspond to each of the individual classification type areas just as shown in the display example indicated in Fig. 6.

A predetermined color is attached to each of the individual classification type display areas to be distinctive each other. This color information is sent to the thumbnail display page drawing unit 23 via the targeted page deciding unit 44.

The corresponding page deciding unit 43 decides a corresponding relationship of 1 to 1 between the thumbnail display index 7 and the thumbnail display page 2 displayed in the image display area 1 from the classification type display sequence and a number of the classification type pages.

Here, when one of the thumbnail display indexes 7 is clicked through operations of the input device 300 by the user, the index drawing unit 42 accepts the clicking operation. It further detects the location clicked and selects the clicked thumbnail display index 7.

Also, it draws the targeted page index 8 on an upper part of the clicked thumbnail display index 7. The information indicating the clicked thumbnail display index 7 is output to the targeted page deciding unit 44.

The targeted page deciding unit 44 decided a targeted page number that is a number of the thumbnail display page 2 as a targeted page and outputs it to the thumbnail display page drawing unit 23 from the information indicating the clicked thumbnail display index 7 and the corresponding relationship between the thumbnail display index 7 and the thumbnail display page 2 that is an output of the corresponding page deciding unit 43.

The display example shown in Fig. 6 is a second page of the whole and shows that the thumbnail display page 2, which is a first page of the classification type, "Nagano prefecture", is selected as a targeted page.

From the actions mentioned above, the classification type drawing unit 21 draws the classification type display area 5 and displays it on the display 200 via the output unit 24.

<5. Drawing of the image display area 1>

Next, the thumbnail display page drawing unit 23 receives necessary information from the data controlling unit 16 and so on, and draws the image display area 1 including the thumbnail display page 2.

The following explains actions related to the above mentioned drawing taken by the drawing list generating unit 60, the three-dimensional inverse transformation processing unit 61, the thumbnail three-dimensional configuration deciding unit 62, the basic page component memorizing unit 63, the basic page component placing unit 64 and the three-dimensional drawing unit 65, which are composing elements of the thumbnail display page drawing unit 23 shown in Fig. 9.

The drawing list generating unit 60 generates a drawing list from the number of thumbnails per page input from the page configuration calculating unit 15 and the thumbnails and their attribute information acquired from the classification type data memorizing unit 12 via the data controlling unit 16. Here, extraction of the thumbnails subject to display and their attribute information from the classification type data memorizing unit 12 is conducted by the data controlling unit 16.

The drawing list, as shown in Fig. 10, includes a classification type, a page number in the classification page, and a thumbnail identifier as its items. Based on this drawing list, the thumbnail display page 2 is drawn.

In the drawing list shown in Fig. 10, the classification types are listed in a sequence of "Aomori prefecture", "Fukuoka prefecture", "Nagano prefecture". However, in the classification type display area 5 and the image display area 1, it is followed by a classification type display sequence calculated by the sequence calculating unit 19. Also, the sequence to take out thumbnails is in accordance with a predetermined sequence based on shooting dates, time, altitude and longitude that are attribute information of the thumbnails.

Here, the thumbnail display page drawing unit 23 positions a page of the thumbnail display page 2 selected as a targeted page by a user's instruction on a targeted area A, which is the most upfront and biggest area occupied in the image display area 1. In addition, it positions the thumbnail display page 2 other than the targeted page in the untargeted area B.

The alignment sequence of the thumbnail display page 2 in the image display area 1 is an alignment sequence calculated by the sequence calculating unit 19, which is, as mentioned above, a continuous sequence according to similarity of classification types.

That is to say, the thumbnail display page 2 displayed in left and right sides of the targeted page in the untargeted area B has less similarity to the classification type as it goes far away from the targeted page. Using a measure of such similarity, the thumbnail display page drawing unit 23 provides a change in an occupied area, more specifically a display area, of the thumbnail display page 2 displayed in the untargeted area B. In short, as it goes far from the targeted page, the display area size of the thumbnail display page 2 is reduced and a process to provide a three-dimensional visual effect is executed.

The following explains actions taken for the above mentioned process.
The three-dimensional inverse transformation processing unit 61 uses the image display area 1 as a view port for virtual three-dimensional space based on a location and size of the image display area 1 input from the page configuration calculating unit 15.

Also, the three-dimensional inverse transformation processing unit 61 decides a virtual page configuration in the virtual three-dimensional space using following five elements as an input.

The five elements are size and a configuration of the thumbnail display page 2 decided by the page configuration calculating unit 15, a location of a virtual camera that is set in advance, an angle of view of the virtual camera that is set to acquire an image in an aspect ratio equivalent to a vertical to horizontal ratio of the image display area 1 and a specific distance from a rectangular virtual screen to be displayed as a targeted page.

The following describes a deciding method for a virtual page configuration. An image display in an ordinary three-dimensional process is to convert a local coordinate system of a three-dimensional component to a world coordinate system, shoot it with a virtual camera on a virtual screen and convert it to a screen coordinate system.

Since a page configuration area in the screen coordinate system is available as an input at this point, it means to execute an inversed conversion process and calculate a virtual page configuration in the local coordinate system. That is to say, if the virtual camera information such as a virtual camera location is specified, and if the virtual screen and a virtual page configuration in a viewing coordinate system are in parallel, and besides their distance is fixed, it is possible to calculate a virtual page configuration by conducting the inversed coordinate conversion.

Here, the three-dimensional inverse transformation processing unit 61 adds an area for identification from other classification type pages to a virtual page configuration. For example, if the virtual page configuration is a rectangular, a configuration that surrounds the rectangular is set. In addition, a classification type component, which is a component to identify it from other classification type pages, is pasted on the configuration surrounding its rectangular. Or it is supplemented by dividing the rectangular and treating them as a classification type component.

Fig. 12A is a diagram to show the virtual page configuration. As shown in Fig. 12A, there is a classification type part 82 in a surrounding edge of a virtual page configuration 80, and furthermore, there is a header component 81, which is to show a header of the page, on one of its sides. The header part 81 is memorized in advance in the basic page component memorizing unit 63.

Next, the thumbnail three-dimensional configuration deciding unit 62 calculates a virtual thumbnail configuration, which is a thumbnail configuration mapped on the thumbnail display page 2 in a virtual page configuration. Although this can be calculated in the same way as the above mentioned method for the three-dimensional inverse transformation processing unit 61, it can also be calculated by the number of thumbnails per page and position of the thumbnails.

In short, a ratio of an alignment location for thumbnails calculated by the page configuration calculating unit 15 with the number of thumbnails per page and stipulated size of thumbnails calculated based on the above (Formula 1)

**EP 1 705 583 A1**

is applied to the coordinate system in the virtual page configuration calculated by the three-dimensional inverse transformation processing unit 61. From this way, the virtual thumbnail configuration can be calculated.

The thumbnail three-dimensional configuration deciding unit 62 memorizes the virtual page configuration and the virtual thumbnail configuration calculated above as a basic page component in the basic page component memorizing unit 63. As mentioned above, the header component to show a header is already stored in the basic page component memorizing unit 63.

Next, the basic page component placing unit 64 executes calculation for placing the thumbnail display page 2 in virtual three-dimensional space. To be more specific, with the number of classification type pages input from the page count calculating unit 17 and a display sequence of classification types input from the sequence calculating unit 19, a number of all of the thumbnail display pages 2 to be drawn and alignment of these thumbnail display pages 2 are calculated. Moreover, alignment of the basic page components in a local coordinate system, which corresponds to the thumbnail display page 2 of a targeted page number input from the targeted page deciding unit 44, is calculated. Also, the alignment of the basic page components is calculated in the world coordinate system to make the display areas on the screen smaller when drawn as they are located far from the targeted page.

A targeted page number input from the targeted page deciding unit 44 is a page number indicating where the page is located from a left side of the thumbnail display pages 2 in the image display area 1. The thumbnail display page 2, which is a targeted page, is specified from this number, the classification type display sequence input from the sequence calculating unit 19 and a drawing list acquired from the drawing list generating unit 60.

Fig. 12B is a drawing to express a typical example for alignment of a plural number of the same basis page components in a world coordinate system. In Fig. 12B, an x axis and a y axis are located for a basic page component as a targeted page in a local coordinate system, on a straight line L, which is in parallel with the X axis on a plane surface P vertically located on a Z axis in the world coordinate system.

Also, an origin $O_{-1}$ of the basic page component corresponding to the thumbnail display page 2, which is closest to the targeted page, is located on the straight line L, and the y axis is on the plane surface P and located in parallel with the Y axis in the world coordinate system.

The X axis is facing a little towards the Z axis from the plane surface P. In the same way, (a distance between $O_0$ and $O_{-1}$) > (a distance between $O_{-1}$ and $O_{-2}$) > (a distance between $O_{-2}$ and $O_{-3}$) are applicable to $O_{-2}$ and $O_{-3}$ on the straight line L.

In addition, all of y axes are in parallel with the Y axes. As it goes far away from the targeted page, the x axes are facing towards the Z axes. On the other hand, a right below edge $P_1$ of the basic page component, of which origin is $O_1$, is on the straight line L, and its y axis is located in parallel with the Y axis. In the same way, $P_2$ and $P_3$ are located on the straight line L, and moreover, in order to make (distance between $P_0$ and $P_1$) > (distance between $P_1$ and $P_2$) > (distance between $P_2$ and $P_3$) applicable, the x axes are located in a way that gradually face towards the -Z axes. Also, a header component is attached on a first page of each classification type. Each of the classification types is displayed on the header component.

In short, as shown in Fig. 12 B, the basic page component placing unit 64 puts the basic page components at shorter intervals and in bigger angles between the x axis and X axis as they are located further from the targeted page. Since the thumbnail display page 2 is to be drawn on these basic page components, the thumbnail display page 2 is placed three-dimensionally to make its display area smaller on the screen, as it is far from the targeted page.

It is also possible to decide distance between origins for each page components such as $O_0$ $O_{-1}$ and $O_{-2}$, and distance between points showing the right bottom of each basic page component such as $P_0$, $P_1$ and $P_2$ with geometric progression.

Also, if the distance between $O_0$ and $O_1$ is set as c, and if the distance $O_1$ and $O_2$ is set as geometric progression of c·r (r< 1), the distance occupying on a horizontal axis direction of the thumbnail display page 2 can be calculated by a sum of the geometric progression of a number of the thumbnail display pages 2. In short, c can be decided by calculating c where the sum of the geometric progression equals to a width of the horizontal axis direction of the image display area 1.

Also, these distances are decided to place all of the basic page components are contained within a view volume provided by an angle of a virtual camera view. In the same way, a rotation of the basic page component around the y axis can also be calculated by setting its rotation angle as geometric progression.

In the present embodiment, in the case where the basic page component is a plane rectangular component and a plural number of the basic page components are aligned, a side of the Y axis direction, which is closest to the virtual camera is located on the place surface P, and besides each top of both ends of this side is aligned to be placed on a parallel straight line to the X axis of the plane surface P.

In short, in the present embodiment, when drawn, empty space other than the thumbnail display page 2 is reduced as much as possible within the image display area 1, and thumbnails close to the virtual camera on the thumbnail display page 2 near the targeted page are placed to be viewed in a well balance with the thumbnails on the targeted page.

Next, the three-dimensional drawing unit 65 takes out the basic page component and the header component, which are used as a basis to place the thumbnail display page 2, from the basic page component memorizing unit 63.

Furthermore, using positions of the basic page component and the header component in the world coordinate system created by the basic page component placing unit 64 (in the present embodiment, the origins, the X axes and the Y axes in the viewing coordinate system and the world coordinate system are identical), coordinate conversion is applied to make them be in a screen coordinate system. Next, based on a thumbnail identifier of the drawing list generated by the drawing list generating unit 60, a thumbnail to be drawn is taken out from the classification type data memorizing unit 12. A thumbnail configuration decided by the thumbnail three-dimensional configuration deciding unit 62 is applied to the thumbnail taken out, and a mapping process is executed to it onto the basic page component.

Additionally, a classification type component, which is a component to identify the page from other classification type page is drawn in a color designated in an item called "color" within the drawing list.

Here, a value set as an input of the three-dimensional inverse transformation processing unit 61 is used for a location and an angle of view in the world coordinate system of the virtual camera, it is also optionally possible to set them from characteristics of the three-dimensional process. Also, for a process of a hidden surface, if a Z buffer process catered in a graphics engine of PC is used, it can be executed in high speed.

From above mentioned actions taken by the three-dimensional drawing unit 65, the image display area 1 is drawn. The drawn image display area 1 is displayed on the display 200.

As mentioned above, the image display device 100 in the present embodiment draws a thumbnail by each of the thumbnail display pages 2.

Here, if there are so many thumbnails that are subject to thumbnail display, it is difficult to display all of the thumbnail display page 2 in the same size. Therefore, the image display device 100 set a targeted page within a plural number of the thumbnail display pages 2.

Also, the image display area 1 has virtual three-dimensional space, and a front location of the targeted page faces towards an targeted area A, which is located at the most upfront position and has the biggest display area. Anything other than the targeted page is located in the untargeted area B, which is located at right and left sides of the targeted area A.

A plural number of the thumbnail display pages 2 located in the image display area 1 are aligned from a left side of the image display area to a right side according to a classification type indication sequence calculated by the sequence calculating unit 19.

Here, the classification type indication sequence is, as mentioned above, a continuous sequence according to similarity of the classification types. In addition, the image display device 100 executes a process to reduce a display size of the thumbnail display page 2 in the untargeted area B on the screen through the three-dimensional process as it is far from the targeted page.

In short, it means untargeted pages are condensed and their display size is reduced according to a meaning distance of the classification types, which exist between the classification types corresponding to the targeted pages and the classification types corresponding to the untargeted pages.

For example, assume a case that thumbnails having any of months from "January" to "December" as attribute information indicating a shooting month subject to thumbnail display.

If the thumbnail display page 2 of which classification is "July" is a targeted page, a month which is most similar to July is June and August. Therefore, a display area of the thumbnail display page 2 of which classification type is "June" or "August" is a second biggest area after a display area of the thumbnail display page of "July". Then, next months in the sequence, which are "May" and "September", are displayed with smaller occupying areas. This is effective because it is highly likely that the user updates the target page to the thumbnail display page 2 closely located to the targeted page.

Also, suppose the classification type subject to thumbnail display is "Region" and the classification type of the targeted page is "A Prefecture", which are shown by the display example in Fig. 6. In this situation, the classification type of the thumbnail display page 2 close to the targeted page is prefectures near the A prefecture. That is to say, it can be considered that a plural number of neighbor prefectures are often covered in travel pictures so that the user can easily finds out a thumbnail of a picture he aims at finding from a plural number of thumbnails of travel pictures.

As mentioned above, the image display device 100 in the present embodiment can draw a targeted page selected to be viewed by the user and the thumbnail display page 2 near the targeted page at the same time. Also, as the thumbnail display page 2 is closer to the targeted page, a level of similarity for the classification type of the thumbnail display page 2 is higher to the classification type of the targeted page. Also, the display area in the image display area 1 becomes bigger.

In this way, the user can view the thumbnails efficiently. That is to say, it is easier to find a targeted image file from a large amount of image files.

Also, in the classification type display area 5, an individual classification type area is displayed according to a number of the thumbnail display page 2 for each classification type. Therefore, if a plural number of the classification types are subject to thumbnail display, the user can visually seize how many image files are available for each of the classification types.

Additionally, the thumbnail display page 2 other than the targeted page is displayed in the untargeted area B of the image display area 1. The targeted page is updated by clicking the thumbnail display index 7 displayed in the classification type display area 5. In short, the user can instantly switch a targeted page by clicking the thumbnail display index 7.

Also, a targeted page index 8 is displayed on the thumbnail display index 7 corresponding to the targeted page. Therefore, even if there are a plural number of the thumbnail display pages 2, it is easily identifiable which thumbnail display page 2 of which classification type is currently a target page.

Moreover, a three-dimensional CG display is used as an optimum display format that extends characteristics of the present invention that display thumbnails by each unit of the thumbnail display page 2. To be more specific, a targeted page facing to a front is displayed in the upfront location of the virtual three-dimensional space. Also, the untargeted pages other than the targeted page are displayed at right and left sides of the target page in a way they diagonally across the screen. That is to say, it is possible to display the thumbnails in an expressing method close to reality for the user.

The method to update the targeted page can be any method other than clicking the thumbnail display index 7. For example, by clicking the thumbnail display page 2 other than the targeted page, the clicked thumbnail display page 2 can be updated to a targeted page.

Fig. 13 is a functional block diagram of a page click detecting unit 70, which is a composing unit for updating a targeted page through the click on the thumbnail display page 2.

As shown in Fig. 13, the page click detecting unit 70 includes a coordinate detecting unit 71, a crossing deciding unit 72 and a targeted page deciding unit 73. By having the page click detecting unit 70, the image display device 100 can update a targeted page when the thumbnail display page 2 is clicked. The page click detecting unit 70 is an example of a deciding unit in the image file display device of the present invention.

The coordinate detecting unit 71 is a processing unit that detects a point designation through a click of the user, and outputs a point coordinate value. The crossing deciding unit 72 is a processing unit that specifies a basic page component in the clicked virtual three-dimensional space based on the point coordinate value. The targeted page deciding unit 73 is a processing unit that decides whether the thumbnail display page 2 is a targeted page corresponding to the basic page component specified by the crossing deciding unit 72.

If an inside of the image display area 1 is clicked by the user, the coordinate detecting unit 71 detects the click via the accepting unit 10. Furthermore, the point coordinate value clicked in the screen coordinate system is output to the crossing deciding unit 72.

The crossing deciding unit 72 receives the point coordinate value, and acquires information related to the virtual three-dimensional space such as a location of the basic page component in the virtual three-dimensional space from the basic page component placing unit 64. Moreover, using the acquired information, it decides whether there is a crossing point between a sight line passing the point coordinate value from the virtual camera location and the basic page component within the virtual three-dimensional space. In addition, if there is a crossing point, the basic page component closest to the virtual camera, which means the basic page component located at an upfront position is specified. If there is no crossing point, no actions are taken.

From a cross relationship between a position of the basic page component and the thumbnail display page 2 in the three-dimensional space, the targeted page deciding unit 73 decides whether the thumbnail display page 2 corresponding to the basic page component specified by the crossing deciding unit 72 is a current targeted page or not. Briefly, it decides whether the thumbnail display page 2 clicked by the user is a current targeted page or not.

If it is not the targeted page, a page number of the clicked thumbnail display page 2 is output as a targeted page number in the thumbnail display page drawing unit 23. The thumbnail display page drawing unit 23 receives the targeted page number, and draws the thumbnail display page 2 corresponding to the targeted page number as a targeted page.

Also, the targeted page number is output to the index drawing unit 42. The index drawing unit 42 draws a targeted page index 8 on an upper part of the thumbnail display index 7 corresponding to the thumbnail display page 2 that becomes a targeted page.

If the clicked thumbnail display page 2 is decided to be the current targeted page by the targeted page deciding unit 73, the crossing deciding unit 72 decides whether it intersects with a virtual thumbnail configuration. If it intersects with a virtual thumbnail configuration through the intersection decision, a signal to call up an original image file of the thumbnails that intersects. If it does not intersect with it, no actions are taken.

As mentioned above, it makes it easier for the user to update a targeted page by having the image display device 100 include a component part that updates a targeted page by clicking the thumbnail display page 2. In short, it provides an effective means to find out an image file targeted to.

Moreover, when a targeted page is switched, a motion of the thumbnail display page 2 can be displayed in animation.

Fig.14 is a diagram to show an example of the typical animation display when the targeted page is switched.

As shown in Fig. 14, the targeted page index 8 plays a role as a tab of a slider for continuously updating the targeted page. Also, suppose there are three thumbnail display indexes 7, which means there are three thumbnail display pages 2. In addition, hereinafter, when a "slider location" is stated, it indicates a location of the targeted page index 8.

In Fig. 14A, the slider location is located at the thumbnail display index 7 on a left side, and the thumbnail display page #1 is displayed as a targeted page.

Next, in Fig. 14B, the slider location is a location in middle of the thumbnail display index 7 on a left side and the thumbnail display index 7 in the center. There is no explicit targeted page. And a thumbnail display page #1 and a thumbnail display page #2 are displayed in the same configuration.

Also, in Fig. 14C, the slider location is located at the thumbnail display index 7 in the center, and the thumbnail display page #2 is the targeted page.

In this case, for example, the index drawing unit 42 can detect motions of a mouse pointer operated through the input device 300 by the user, and draw the targeted page index 8 according to the motions. Additionally, those motions can be transmitted to the thumbnail display page drawing unit 23, and the thumbnail display page drawing unit 23 can draw the thumbnail display page 2 according to the motions.

As mentioned above, the image display device 100 can display switching of the targeted pages with an animation display, which means it is possible to display it with moving pictures. Also, the user can use the targeted page index 8 as a tab of the slider, and switches the targeted page.

By making it in this way, a response to operations of the slider executed by the user can be explicitly expressed as animated motions. Furthermore, if the slider is stopped at a central location of the thumbnail display indexes 7, the animation is also stopped. That is to say, in a half way state of an updating process for a targeted page, two thumbnail display pages 2 located next each other can be viewed simultaneously. In this way, the user can simultaneously grasp an overview of thumbnails existing in those two thumbnail display pages 2 located next each other. Moreover, it is possible to view all of the thumbnail display pages 2 by moving smoothly between them.

In the way like this, displaying the thumbnail display page 2 dynamically and updating the targeted page smoothly are quite effective for the user to find out an image he is targeted to.

In addition, it is mentioned above that the individual classification type is displayed in the individual classification type name display section 6 within the classification type display area 5. However, it may be located, for example, in a thumbnail display window in a list format.

Fig. 15 is a diagram to show a display example in the case where the classification type list is located in the thumbnail display window. As shown in Fig. 15, a classification type list 9 is displayed at a left side of the thumbnail display window.

Layered classification types are displayed in the classification type list 9. For example, each classification type of "January", "February", "March", "April", "May", "June" and "September" exists under the classification type called "Year 2003". This classification type such as "January" is displayed by clicking a "+" button located on a left side of "Year 2003". In sum, by clicking the "+" button, classification types in a lower layer of the classification type are sorted and displayed in a list.

Fig. 15 is a display example in the case where "Year 2003" is selected from the classification type list 9 by the user. In short, it indicates that thumbnails having the classification type "Year 2003" as attribute information are subject to display. Also, in the classification type display area 5, the classification types such as "January" and "February" in the classification type "Year 2003" are displayed, and the thumbnail display pages 2 corresponding to the classification types are displayed in the image display area 1.

Under this situation, if, for example, Year 2001 is clicked, thumbnails having the classification type "Year 2001" as their attribute information become subject to display.

For example, drawing related to the above classification type list 9 can be conducted by the thumbnail display page drawing unit 23. The thumbnail display page drawing unit 23 acquires a classification type memorized in the classification type data memorizing unit 12 via the data controlling unit 16 and can draw the classification type list 9.

Also, for example, the index drawing unit 42 acquires information regarding a location of the classification type list 9 in the thumbnail display window and detects the location clicked. Additionally, from the detected location, it can output information to change the display of the classification display list from the detected location into the thumbnail display page drawing unit 23, etc.

As mentioned above, by placing the classification type list in the thumbnail display window, for example, it is possible for the user to directly select a classification subject to thumbnail display from many classification types. In short, when the user views many thumbnails, he can easily move to other classification type. As a result, it is possible to ease a process to find out an image file that is targeted to.

Also, in the display example shown in Fig.6, it is supposed that the classification type of a prefecture name such as "Aomori prefecture" is registered by the operations of the user. However, the classification type can be generated from attribute information in the image files memorized in the image file memorizing unit 11.

Fig. 16 is a diagram to show a display example in the case where attribute information of the image file is displayed in the display 200.

As shown in Fig. 16A, the image file is shot by a digital camera, etc., and a file name, a manufacturer's name of the digital camera, etc. are added as attribute information when it is stored. The data controlling unit 16 extracts a shooting date from this attribute information and has the classification type data memorizing unit 12 memorize each of its year, month and day as attribute information together with its thumbnail.

Moreover, the data controlling unit 16 has the classification type data memorizing unit 12 memorize, for example, "Year 2003" as a classification type. In addition, it has the classification type data memorizing unit 12 memorize "January", "February", etc. as a classification type, which are a month the thumbnails holds as attribute information by corresponding it to "Year 2003". In this way, when "Year 2003" is specified as subject to thumbnail display, thumbnails belonging to the classification types such as "January", "February", etc. contained in the classification type "Year 2003" become subject to thumbnail display.

Also, in the image display device 100, the user may add new attribute information for an image file.

Fig. 16B is a diagram to show a display example of a keyword input screen for the user entering a keyword for an image file.

In this case, for example, it is possible that the data controlling unit 16 accepts an entry of letter strings from the input device 300 by the user, and has the image file memorizing unit 11 memorize it as attribute information of the relevant image files. Furthermore, it is possible to have the classification type data memorizing unit 12 memorize the keyword as a classification type.

In this way, a keyword can be a classification type, and thumbnails having the same key word as attribute information can be treated as an object to be displayed.

That is to say, if the user wants to group a plural number of image files into the same classification type, a same keyword can be set for these image files. In this way, if the keyword is designated as a classification type, the image display device 100 can display thumbnails of these image files at once. As a result, it makes it easier for the user to find out an image file, which is targeted to, from these image files.

In addition, by displaying the classification type list 9 shown in the above mentioned Fig. 15, it is possible to display a list of image files having the keyword as attribute information.

Also, in the present embodiment, it is explained that there is virtual three-dimensional space in the image display area 1, and that the thumbnail display page drawing unit 23 makes a drawing by executing a three-dimensional process on the thumbnail display page 2. However, the thumbnail display page drawing unit 23 can make a drawing on the thumbnail display page 2 by executing a two-dimensional process in stead of the three-dimensional process.

Fig. 17 is a functional block diagram of the thumbnail display page drawing unit 23 for executing a two-dimensional process and displaying a result of the process on the thumbnail display page 2. The thumbnail display page drawing unit 23 shown in Fig. 17 can draw a plural number of the thumbnail display pages 2, for example, in a position and a configuration shown in Fig. 18.

Fig. 18 is a diagram to show a display example of the thumbnail display page 2 that the thumbnail display page drawing unit 23 makes a drawing and displays it on the display 200. As shown in Fig. 18, the targeted page is at a forefront position and has a biggest display area. Also, as the thumbnail display page 2 recedes from the targeted page, the thumbnail display page 2 is scaled down and its display area becomes smaller, deletion of a hidden surface is conducted, and three-dimensional expression is applied.

Even in this case, as far as an alignment sequence of the thumbnail display pages 2 is concerned, continuity of similarity for their attribution information is not lost. In short, the user can see the outline of the thumbnail display pages that are closely related to the targeted page, which are in vicinity to the targeted page that is currently subject to viewing.

The thumbnail display page drawing unit 23 shown in Fig. 17 includes the drawing list generating unit 60, a two-dimensional page drawing unit 32, a two-dimensional image deforming unit 33, a drawing sequence sorting unit 51, and a placement calculating unit 52.

The drawing list generating unit 60 is the same as the drawing list generating unit 60 shown in Fig. 9, which is a processing unit to generate a drawing list (See Fig. 10). The two-dimensional page drawing unit 32 is a processing unit that acquires a thumbnail to be drawn via the data controlling unit 16 and two-dimensionally draws thumbnail display page 2.

The two-dimensional image deforming unit 33 is a processing unit that deforms the thumbnail display page 2 through affine transformation and outputs it at an appropriate location. The drawing sequence sorting unit 51 is a processing unit that decides a drawing sequence of a plural number of the thumbnail display pages 2. The placement calculating unit 52 is a processing unit that calculates a parameter of affine transformation applied to the untargeted page.

The thumbnail display page drawing unit 23 composed as above draws a plural number of the thumbnail display pages 2 at the position and in a configuration shown in Fig. 18 through actions taken as follow.

At first, the drawing sequence sorting unit 51 receives a number of classification type pages from the page count calculating unit 17, a classification type display sequence from the sequence calculating unit 19 and a targeted page number from the targeted page deciding unit 44.

The drawing sequence sorting unit 51 decides a drawing sequence for all of the thumbnail display pages 2 to be drawn and outputs a page number of the thumbnail display page 2, which is the farthest from the targeted page, as a page number to be drawn at first. In other words, the two-dimensional page drawing unit 32 selects and starts drawing the thumbnail display page 2 of which number is the farthest from the targeted page number.

Also, the number of the page to be drawn at first is sent to the placement calculating unit 52.

The placement calculating unit 52 decides a parameter of affine transformation from the page number of the page to be drawn, the number of the classification type pages and the targeted page number. Here, a parameter is output for making the thumbnail display page 2, which is the farthest from the targeted page number, be most deformed and scaled-down.

The two-dimensional image deforming unit 33 deforms the thumbnail display page based on this parameter and outputs it at an appropriate location.

Next, the drawing sequence sorting unit 51 outputs a drawing page number, which is the second farthest from the targeted page. The two-dimensional page drawing unit 32 draws the thumbnail display page 2 of the designated drawing page number.

The placement calculating unit 52 also output a parameter of affine transformation of which scaled-down ratio is lowered down, and continues the same process.

Here, in the same way as the basic page component placing unit 64 shown in Fig. 9, a distance between the thumbnail display pages 2 may be decided through geometric progression.

By repeating the above actions until the targeted page is drawn, a plural number of the thumbnail display pages 2 at the position and in the configuration shown in Fig. 18 are displayed.

The two-dimensional drawing may also be conducted in a simpler configuration.

Fig. 19 is a functional block diagram to show the thumbnail display page drawing unit 23 in other configuration for executing a two-dimensional process to the thumbnail display page 2 and displaying the result. The thumbnail display page drawing unit 23 shown in Fig. 19 can draw, for example, a plural number of the thumbnail display pages 2 at the position and in a configuration shown in Fig. 20.

Fig. 20 is a diagram to show a display example of the thumbnail display page 2 that is drawn and displayed on the display 20 by the thumbnail display page drawing unit 23 shown in Fig. 19. As shown in Fig. 20, the targeted page is at the forefront, and an occupied area of the thumbnail display page 2 becomes smaller as it recedes from the targeted page.

Even in this case, as far as an alignment sequence of the thumbnail display page 2 is concerned, continuity of similarity for its attribution information is not lost. In short, the user can see the outline of the thumbnail display pages that are closely related to the targeted page, which are in vicinity to the targeted page that is currently subject to viewing.

The thumbnail display page drawing unit 23 shown in Fig. 19 includes the drawing list generating unit 60, the two-dimensional page drawing unit 32 and the two-dimensional image deforming unit 33. These composing units are the same as those for the thumbnail display page drawing unit 23 shown in Fig. 17, but draw a plural number of the thumbnail display pages 2 at the position and in a configuration shown in Fig. 20 through difference procedures.

The drawing list generating unit 60 outputs a drawing list and outputs it to the two-dimensional page drawing unit 32.

The two-dimensional page drawing unit 32 decides the thumbnail display pages 2 to be drawn and its drawing sequence from the drawing list and a classification type display sequence received from the sequence calculating unit 19. In addition, it acquires necessary thumbnails via the data controlling unit 16, and draws the thumbnail display page 2. The drawn thumbnail display page 2 is output to the two-dimensional image deforming unit 33.

The two-dimensional image deforming unit 33 holds data of the thumbnail display page 2 drawn by the two-dimensional page drawing unit 32, and decides the thumbnail display page 2, which becomes an targeted page. For example, if the number of the classification type pages is "5", it selects "3" in the center. In this way, the thumbnail display page 2 of which classification type display sequence has a third position is decided to be a targeted page.

Moreover, it executes affine transformation for horizontal movement to first and fifth thumbnail display pages 2, which are farthest from the targeted page and outputs them at positions far from the targeted page. In the same way, it outputs second and fourth thumbnail display pages 2 at designated right and left positions of the targeted page. Lastly, it outputs and places the third thumbnail display page 2, which is decided to be the targeted page, in the center.

The two-dimensional drawing unit 32 may make drawing regardless of the classification display sequence. For example, it draws in a sequence of the drawing list shown in Fig. 10, and retains these drawn thumbnail display pages 2. Besides, it may output these drawn thumbnail display pages 2 into the two-dimensional image deforming unit 33 according to the classification type display sequence.

As mentioned above, the thumbnail display page drawing unit 23 can be configured to execute the two-dimensional process. In short, it may not require capabilities to make three-dimensional drawings and may be in a simpler configuration.

Also, even in the case where it draws the two-dimensional thumbnail display page 2, the user can see an outline of the thumbnail display pages that are closely related to a targeted page, which are in vicinity to the targeted page that is currently subject to viewing.

Also, in the current embodiment, the configuration of the thumbnail display page 2 is supposed to be a rectangular. However, the configuration of the thumbnail display page 2 may not be a rectangular.

The following explains an embodiment in the case where a non-rectangular area such as a trapezoid area and a hexagon area is used for a configuration of the thumbnail display page 2. Here, processes for the page configuration calculating unit 15 and the basic page component placing unit 64, which are different from those processes for the aforementioned embodiment are explained.

The page configuration calculating unit 15 retains configuration data for the thumbnail display page and a derivation formula exclusively used for the page configuration within its unit. This derivation formula is to uniquely decide a number of thumbnails that can be pasted on each page according to input values for numbers of pixels in vertical and horizontal direction of the image display area 1 in the same way as the formula 1 in the aforementioned embodiment.

In the description of the above mentioned embodiment, it is explained that the page configuration calculating unit 15 finds a number of pages in the vertical axis direction and in the horizontal axis direction. However, regarding a way thumbnails are aligned in the case where a maximum number of thumbnails are displayed just like a case that a non-rectangular configuration such as a trapezoid and a hexagon is selected for the thumbnail display page, they are not necessarily aligned in a form that n lines and m rows of the thumbnails are displayed. In short, it is difficult to decide the derivation formula applicable to any kind of page configurations.

Therefore, the page configuration calculating unit 15 retains derivation formulas per page configuration. In the page configuration calculating unit 15, after it finds a number of thumbnails to be displayed by each page using this derivation formula, it adjusts the configuration of the thumbnail display page 2 according to the number of the thumbnails. This adjustment is done through, for example, a scaling process in each direction of X, Y and Z for the available configuration of the available thumbnail displayed page.

Based on each size (circumscribed rectangle) of the thumbnail display page configuration in X, Y and Z directions, which is adjusted in the page configuration calculating unit 15, in the basic page component placing unit 64, locations that do not cause collision or interference between a plural number of thumbnail display page configurations are calculated and coordinates to place where the thumbnail display pages 2 within the space are decided.

In this case, regarding the position of the thumbnail display page 2, it does not have to be aligned in a horizontal axis direction. For example, in the case where the page configuration is a hexagon, the position may be the one that is unlikely to loose a thumbnail display area due to overlaid pages, such as positioning to put the image display area 1 allover the space in a two-dimensional manner.

As mentioned above, the image display device 100 can treat a page configuration of a non-rectangular thumbnail display page 2 as a non-rectangular item, and decides its position using its characteristic feature. In sum, it is possible to display the thumbnails in other display format to the user without loosing user friendliness to find an image file.

Also, x is set as a variable number in the formula (Formula 1) in order for the page configuration calculating unit 15 to calculate a number of thumbnails per page. However, it is also possible to use a parameter a, b, d as a variable number other than x.

For example, it is possible to designate a number of thumbnails per page, and then numbers of pixels in vertical and horizontal axes of the thumbnails and a distance between the thumbnails may be decided. In this case, according to Formula 1, the page configuration calculating unit 15 may fix prescribed values for k as a number of the thumbnails in a horizontal axis direction of the thumbnail display page 2 and x as a number of pixels in a horizontal axis direction for its marginal blank, and calculate a as a number of pixels in a horizontal axis of the thumbnails and b as a number of pixels in a horizontal axis between the thumbnails.

Furthermore, using the result of the above calculation, S as a number of pixels in a horizontal axis direction of the thumbnail display page 2 can be calculated. Also, in the same way as a case the size of the thumbnail is designated, the page count calculating unit 17 can calculate a number of classification type pages from a number of thumbnails per classification type and a number of thumbnails per page designated.

In addition, it is explained that the display area calculating unit 18 decides a location and a number of pixels of the classification type display area 5 in its horizontal axis by reducing another area from an area of the thumbnail display window. However, in stead of calculating the location of the classification type display area 5 and the number of pixels in its horizontal axis, it can be the same as the number of pixels in a horizontal axis of the image display area 1.

Or, it may be a value based on the horizontal width of the image display area 1. In this case, the value of the image display area calculating unit 14 may be utilized.

In this way, the processes executed by the display area calculating unit 18 can be reduced. In short, the overall process efficiency of the image display device 100 can be improved.

Also, it is explained that a classification type parameter is used when the sequence calculating unit 19 calculates a classification type display sequence. For example, in the explanation of the above mentioned embodiment, one example is given to show how the classification type sequence of "Aomori prefecture", "Nagano prefecture" and "Fukuoka prefecture" is calculated by using the classification parameter called "From north". In sum, it shows a case that a classification type parameter is information related to the classification type itself.

However, the classification type parameter does not have to be related to the classification type itself. For example, the classification type parameter may be "From a biggest number of pages by each classification type". In this case, if it is assumed that the user inputs or selects this classification type parameter, this user's interest is in the number of the thumbnail display pages 2 by each classification type.

In this case, the thumbnail display pages 2 are displayed in a sequence based on "a number of pages by each classification type". In sum, they are in a sequence corresponding to the user's interest. Consequently, they are in a sequence that makes it easy for the user to find an image file he is targeting to.

Also, when the thumbnail display index 7 indicated in the classification type display area 5 is clicked by the user, the targeted page index 8 is moved on the top of the clicked thumbnail display index 7. However, the clicked thumbnail display index 7 itself may be changed and indicate the thumbnail display page 2 corresponding to the targeted page.

For example, a configuration or color of the thumbnail display index 7 may be changed. In this way, for example, it is further easy to have the user recognize the thumbnail display page 2 currently selected as the targeted page by the user is for which classification type among those subject to display.

In addition, it is explained that the image display device 100 draws a thumbnail, which is a scaled-down image of the image files memorized in the image file memorizing unit 11. However, it may draw a thumbnail of a moving image in stead of an image file.

In this case, a source for extracting or generating the thumbnail just becomes a moving image. In short, the data controlling unit may have a function to extract or generate a thumbnail from the moving image.

In this way, the image display device 100 can handle data files in many kinds of formats, which improves a utility value of the image display device 100.

Also, in the thumbnail display page 2, it is explained that a file name of the image file that is an original image of the thumbnail is displayed in a thumbnail frame. However, some information other than the file name may be displayed in the thumbnail frame.

For example, an icon that shows a season when an image file indicated by a thumbnail is taken can be displayed. Additionally, if the image display device 100 is, for example, configured to handle a moving image data as mentioned above, an icon that indicates a thumbnail of the moving image might be displayed. Also, including these icons, information displayed in a thumbnail frame 4 may be displayed in an untargeted page.

In this way, it is possible to visually tell attribute information of the thumbnail to the user. In short, the user can easily recognize contents of a thumbnail, and consequently it makes it easy for the user to find a targeted image file.

Also, as shown in Fig. 6, it is explained that a targeted page is displayed in a middle of the image display area 1, and other thumbnail display pages 2 are displayed right and left side of the targeted page. However, it is possible to have other positional relationship between the targeted page and other thumbnail display pages 2.

For example, the thumbnail display page 2 other than the targeted page may be displayed only at a right side of the targeted page, or displayed at upper and lower sides of the targeted page.

In sum, if the targeted page has a maximum display area in the image display area 1, the thumbnail display pages 2 other than the targeted page may be displayed anywhere. In this way, it is possible to freely design the image display area 1.

Additionally, in the explanation of the above mentioned embodiment, only a thumbnail list display function held by the image display device 100 is explained. However, the image display device 100 can display an original image of the thumbnail. The following explains an overview of actions taken to display the original image.

When a thumbnail within a targeted page is clicked through operations of the input device 300 by the user, the classification type drawing unit 21 accepts the click operation via the accepting unit 10. The classification type drawing unit 21 specifies the clicked thumbnail and informs it to the thumbnail display page drawing unit 23. The thumbnail display page drawing unit 23 calls up an original image of the thumbnail from the image file memorizing unit 11 via the data controlling unit 16. The called up file is output to an output unit 24 by the thumbnail display page drawing unit 23 and displayed on the display 200.

It is possible to have a composing unit exclusively available for a process to display an original image. In this way, it is possible to disperse a processing load related to the display of a thumbnail and an original image so that processing speed can be improved.

**Industrial Applicability**

An image file list display device of the present invention is to provide an interface managed by each page, which can be applied to image management software of a PC or to a built-in application of a digital still camera. Also, it can be applied to a user interface of a cell phone that contains a camera being replete with three-dimensional processes.

Additionally, it can easily accommodate remote controlled operations from a viewpoint of an interface provided by a button.

**Claims**

1. An image file list display device that displays on a screen a list of a plurality of image files classified by a series of plural types, said image file list display device comprising
   a scaled-down image display unit operable to display each of the plurality of image files as a scaled-down image which is an image scaled down from an image indicated by each image file,
   wherein said scaled-down image display unit is operable to position and display a scaled-down image corresponding to an image file that belongs to a targeted type on a targeted page, and to position and display a scaled-down image corresponding to an other image file that belongs to the targeted type or a scaled-down image corresponding to an image file that belongs to an other type lying adjacent to the targeted type, on an untargeted page having a smaller display area than the targeted page.

2. The image file list display device according to Claim 1, further comprising
   a classification type display unit operable to display a type where an image file corresponding to a scaled-down image displayed by said scaled-down image display unit belongs to,
   wherein said classification type display unit is operable to display, into alignment corresponding to a location of the targeted page and a location of the untargeted page on the screen, the type where the image file corresponding to the scaled-down image displayed on the targeted page belongs to and the type where the image file corresponding to the scaled-down image displayed on the untargeted page belongs to.

3. The image file list display device according to Claim 2,
   wherein said scaled-down image display unit is operable to display the targeted page and the untargeted page in a row so that the type where the image file corresponding to the scaled-down image positioned on each page belongs to is aligned in an order of the series of plural types.

4. The image file list display device according to Claim 3,
   wherein, in the case where scaled-down images corresponding to image files belonging to a same type are positioned on a plurality of pages, said classification type display unit is operable to display the type corresponding to the pages in an area having size corresponding to the number of the pages.

5. The image file list display device according to Claim 3,
   wherein said scaled-down image display unit is operable to gradually condense and display the untargeted page according to a distance between the type corresponding to the target page and the type corresponding to the untargeted page in alignment of the series of plural types.

6. The image file list display device according to Claim 3,
   wherein said classification type display unit is further operable to display a targeted page index explicitly indicating a type corresponding to the targeted page from among the types displayed.

7. The image file list display device according to Claim 6, further comprising
   a deciding unit operable to acquire point designation on the screen and decide whether the acquired point belongs to the untargeted page or not,
   wherein said scaled-down image display unit is operable to update the targeted page with an untargeted page when said deciding unit decides the point belongs to the untargeted page, change the current targeted page to an untargeted page, and display the untargeted page, and
   said classification type display unit is operable, when a new targeted page is displayed by said scaled-down image display unit, to update the targeted page index by corresponding to the new targeted page, and display the updated targeted page index.

8. The image file list display device according to Claim 7,
   wherein said scaled-down image display unit and said classification type display unit are operable to display a process of the update with a moving image.

9. The image file list display device according to Claim 6,
   wherein said classification type display unit is operable to align the types corresponding to the targeted page and the untargeted page in a row, and display the types,
said image file list display device further comprises a slider display unit operable to display a slider image having a tab, which moves in parallel with the alignment of the types according to a user's operation, and
wherein, in the case where the tab of the slider image is moved, said scaled-down image display unit is operable to update and display the targeted page to have the tab after being moved point a type of the targeted page.

10. The image file list display device according to Claim 9,
wherein said scaled-down image display unit is operable to display a process of the update with a moving image.

11. The image file list display device according to Claim 5,
wherein said scaled-down image display unit is operable to display, in the targeted page and the untargeted page, information indicating attribute information of each scaled-down image, and to display the information indicating attribute information even when the untargeted page is condensed and displayed.

12. The image file list display device according to Claim 3,
wherein, in the case where scaled-down images corresponding to image files belonging to a same type are positioned on a plurality of pages, said scaled-down image display unit is operable to display a header indicating the type on a first page of the plurality of pages.

13. The image file list display device according to Claim 1,
wherein said scaled-down image display unit is operable to position, in virtual three-dimensional space, the targeted page and the untargeted page where the scaled-down images are positioned, and to display a projection view acquired when the targeted page and the untargeted page are viewed from a certain view point.

14. The image file list display device according to Claim 13,
wherein said scaled-down image display unit is operable to position the targeted page and the untargeted page in virtual three-dimensional space so that the targeted page is in parallel with the screen and the untargeted page diagonally intersects the screen.

15. The image file list display device according to Claim 14,
wherein said scaled-down image display unit is operable to position untargeted pages in virtual three-dimensional space in a way that an untargeted page closer to the targeted page among the untargeted pages comes closer to being in parallel with the screen.

16. An image display device that displays an image indicated by an image file selected from a plurality of image files classified by a series of plural types, said image display device comprising:

the image file list display device according to Claim 1;
a selection instruction acquiring unit operable to acquire a selection instruction of a user for a scaled-down image displayed by said image file list display device; and
an image display unit operable to display an image indicated by an image file corresponding to the selected scaled-down image.

17. An image file list display method for displaying on a screen a list of a plurality of image files classified by a series of plural types, said image file list display method comprising
a scaled-down image display step of displaying each of the plurality of image files as a scaled-down image which is an image scaled down from an image indicated by each image file,
wherein, in said scaled-down image display step, a scaled-down image corresponding to the image file that belongs to a targeted type is positioned and displayed on a targeted page, and a scaled-down image corresponding to an other image file that belongs to the targeted type or a scaled-down image corresponding to an image file that belongs to an other image file belonging to other type lying adjacent to the targeted type is positioned and displayed, on an untargeted page having a smaller area than the targeted page.

18. A program for an image file list display device that displays on a screen a list of a plurality of image files classified by a series of plural types, said program causing a computer to execute the step included in the image file list display method according to Claim 17.

19. A computer-readable recording medium in which a program is recorded for an image file list display device that displays on a screen a list of a plurality of image files classified by a series of plural types, wherein the program according to Claim 18 is recorded.

# FIG. 1

401

400

- Summer
- Travel
- Year 2003
- Year 2004
- Scenery
  - 000.jpg
  - 000.jpg
  - 000.jpg
  - 000.jpg

000.jpg · 000.jpg · 000.jpg · 000.jpg

000.jpg · 000.jpg · 000.jpg · 000.jpg

000.jpg · 000.jpg · 000.jpg · 000.jpg

FIG. 2A

401

000.jpg 000.jpg 000.jpg 000.jpg

000.jpg 000.jpg 000.jpg 000.jpg

000.jpg 000.jpg 000.jpg 000.jpg

FIG. 2B

401

400

📁 Summer
📁 Travel
📁 Year 2003
📁 Year 2004
📁 Scenery
├000.jpg
├000.jpg
├000.jpg
├000.jpg

000.jpg 000.jpg 000.jpg 000.jpg

000.jpg 000.jpg 000.jpg 000.jpg

000.jpg 000.jpg 000.jpg 000.jpg

# FIG. 3

FIG. 4A

FIG. 4B

# FIG. 5

FIG. 6

EP 1 705 583 A1

FIG. 7

# FIG. 8

```
                    ┌─────────────┐ 10
                    │ Accepting   │
                    │ unit        │
                    └─────┬───────┘
                          │                                          21
                          │                          Classification type
                          │                          drawing unit
  ┌─────────────┐ 20  ┌──────────────┐ 41  ┌────────────┐ 42        ┌──────────────┐ 24
  │ Individual  │     │ Index        │     │ Index      │           │ Output unit  │
  │ location    │────▶│ location     │────▶│ drawing    │──────────▶│              │
  │ calculating │     │ deciding unit│     │ unit       │           └──────────────┘
  │ unit        │     └──────┬───────┘     └─────┬──────┘
  └─────────────┘            │                   │
                             │    ┌──────────────┐ 43   ┌────────────┐ 44   ┌────────────────┐ 23
                             │    │ Corresponding│      │ Targeted   │      │ Thumbnail      │
                             └───▶│ page deciding│─────▶│ page       │─────▶│ display page   │
                                  │ unit         │      │ deciding   │      │ drawing unit   │
                                  └──────────────┘      │ unit       │      └────────────────┘
                                                        └────────────┘
```

EP 1 705 583 A1

FIG. 9

Thumbnail display page drawing unit — 23

- Data controlling unit — 16
- Page configuration calculating unit — 15
- Drawing list generating unit — 60
- Three-dimensional inverse transformation processing unit — 61
- Thumbnail three-dimensional configuration deciding unit — 62
- Three-dimensional drawing unit — 65
- Basic page component memorizing unit — 63
- Basic page component placing unit — 64
- Output unit — 24
- Targeted page deciding unit — 44
- Page count calculating unit — 17
- Sequence calculating unit — 19

# FIG. 10

| Classification type | Page number within classification type | Thumbnail identifier | Color |
|---|---|---|---|
| Aomori prefecture | 1 | 1,3,9,23 · · · · | Blue |
| Fukuoka prefecture | 1 | 4,12,13,20 · · · · | White |
| | 2 | 21,23,30,32 · · · · | |
| Nagano prefecture | 1 | 2,5,8,10 · · · · | Green |
| | 2 | 6,7,11,15 · · · · | |
| | 3 | · · · · | |

FIG. 11

EP 1 705 583 A1

FIG. 12A

FIG. 12B

## FIG. 13

FIG. 14A

FIG. 14B

FIG. 14C

FIG. 15

FIG. 16A

| File information | Camera information | Keyword |

File name    abco231.jpg

Maker name           O△×
Model name           DigitalOO-3A
Shooting date & time  May 11, 2004   11:13:14

FIG. 16B

| File information | Camera information | Keyword |

File name    abco231.jpg

Keyword

City
Scenery
River

Add    Delete

## FIG. 17

Thumbnail display page drawing unit — 23

- 16 — Data controlling unit
- 15 — Page configuration calculating unit
- 60 — Drawing list generating unit
- 32 — Two-dimensional page drawing unit
- 33 — Two-dimensional image deforming unit
- 24 — Output unit
- 52 — Placement calculating unit
- 51 — Drawing sequence sorting unit
- 17 — Page count calculating unit
- 19 — Sequence calculating unit
- 21 — Targeted page deciding unit

EP 1 705 583 A1

FIG. 18

## FIG. 19

Thumbnail display page drawing unit 23

16 Data controlling unit

15 Page configuration calculating unit

60 Drawing list generating unit

32 Two-dimensional page drawing unit

33 Two-dimensional image deforming unit

24 Output unit

17 Page count calculating unit

19 Sequence calculating unit

EP 1 705 583 A1

FIG. 20

<div align="center">

**INTERNATIONAL SEARCH REPORT**

</div>

| | International application No. |
|---|---|
| | PCT/JP2005/000242 |

| A. CLASSIFICATION OF SUBJECT MATTER |
|---|
| Int.Cl$^7$ G06F17/30 |
| |
| According to International Patent Classification (IPC) or to both national classification and IPC |

| B. FIELDS SEARCHED |
|---|
| Minimum documentation searched (classification system followed by classification symbols) |
| Int.Cl$^7$ G06F17/30, G06F3/14 |

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)
JICST FILE(JOIS), WPI, INSPEC(DIALOG)

| C. DOCUMENTS CONSIDERED TO BE RELEVANT | | |
|---|---|---|
| Category* | Citation of document, with indication, where appropriate, of the relevant passages | Relevant to claim No. |
| Y<br><br>A | JP 2000-105772 A (Sharp Corp.),<br>11 April, 2000 (11.04.00),<br>Claim 1; Par. Nos. [0113] to [0122], [0179] to [0188]; Fig. 1<br>& US 006466237 B1 | 1-3,5-7,9,<br>11-19<br>4,8,10 |
| Y<br><br>A | JP 2002-73684 A (Kabushiki Kaisha San R & B),<br>12 March, 2002 (12.03.02),<br>Claim 1; Par. Nos. [0025] to [0036]; Fig. 3<br>(Family: none) | 1-3,5-7,9,<br>11-19<br>4,8,10 |
| Y<br><br>A | JP 2002-342743 A (Olympus Optical Co., Ltd.),<br>29 November, 2002 (29.11.02),<br>Claim 1; Par. Nos. [0048] to [0057]; Fig. 6<br>(Family: none) | 2-3,5-7,9,<br>11,12<br>1,4,8,10,<br>16-19 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 February, 2005 (28.02.05) | 15 March, 2005 (15.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/000242 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-39132 A (Sharp Corp.),<br>12 February, 1999 (12.02.99),<br>Claim 3; Par. Nos. [0033] to [0040]; Fig. 10<br>(Family: none) | 13-15 |
| A | JP 8-235200 A (Fujitsu Ltd.),<br>13 September, 1996 (13.09.96),<br>Full text; Fig. 6<br>(Family: none) | 1-19 |
| A | JP 2003-38447 A (Hitachi Medical Corp.),<br>12 February, 2003 (12.02.03),<br>Full text; Fig. 7<br>(Family: none) | 1-19 |
| A | JP 2003-303211 A (Fuji Photo Film Co., Ltd.),<br>24 October, 2003 (24.10.03),<br>Full text; Fig. 7<br>(Family: none) | 13-15 |

Form PCT/ISA/210 (continuation of second sheet) (January 2004)

**EP 1 705 583 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10307936 A